# EUROPÄISCHE PATENTSCHRIFT

(11) **EP 3 393 881 B1**
(45) Veröffentlichungstag und Bekanntmachung des Hinweises auf die Patenterteilung: **18.12.2019**
(21) Anmeldenummer: 17705567.0
(22) Anmeldetag: 09.02.2017
(51) Int. Cl.: B60K 13/04

(54) **TANKSYSTEM UND FAHRZEUG**
TANK SYSTEM AND VEHICLE
SYSTÈME DE RÉSERVOIR ET VÉHICULE

(30) Priorität: 31.03.2016 DE 102016205356
(43) Veröffentlichungstag der Anmeldung: 31.10.2018
(73) Patentinhaber: Siemens Mobility GmbH, 81739 München (DE)
(72) Erfinder: NITZSCHE, Christian, 85737 Ismaning (DE); PRÖLL, Günther, 86199 Augsburg (DE); SCHANZ, Stephan, 85716 Unterschleissheim (DE)
(86) Internationale Anmeldenummer: PCT/EP2017/052840
(87) Internationale Veröffentlichungsnummer: WO 2017/167481

(56) Entgegenhaltungen:
- EP-A1- 2 757 232
- WO-A1-2011/078235
- DE-A1-102007 051 922
- DE-T5-112014 000 013

## Beschreibung

Die Erfindung betrifft ein Tanksystem gemäß Patentanspruch 1 und ein Fahrzeug gemäß Patentanspruch 13.

Es ist eine dieselelektrische Lokomotive bekannt, wobei die dieselelektrische Lokomotive eine Antriebseinheit mit einem Dieselmotor und einem Generator umfasst. Der Dieselmotor treibt den Generator an. Um Emissionen des Dieselmotors zu reduzieren, ist ein Abgasnachbehandlungssystem vorgesehen. Das Abgasnachbehandlungssystem verwendet hierbei eine wässrige Harnstofflösung, um Stickoxide im Abgas des Dieselmotors zu reduzieren. Die wässrige Harnstofflösung wird mittels eines Tanksystems gespeichert. Die wässrige Harnstofflösung wird mittels einer Entnahmevorrichtung entnommen und zu dem Abgasnachbehandlungssystem gefördert. Die wässrige Harnstofflösung weist oftmals Verschmutzungen auf, die sich in einem Tank des Tanksystems ablagern. Der Tank ist zur Entfernung der Verschmutzungen regelmäßig zu reinigen.

So ist beispielsweise in DE 10 2008 011 329 A1 ein Schienenfahrzeug mit einer Abgasreinigung gezeigt, wobei für die Abgasreinigung die Harnstofflösung verwendet wird.

Ferner sind in DE 10 2008 011 329 A1, US 2010/0162690 A1 und US 2007/0202019 A1 Harnstofftanks mit einem geringen Speichervolumen gezeigt.

Aus der EP 2 757 232 A1 ist ein Off-Road-Fahrzeug mit einem Abgasreinigungstank und einer Entnahmevorrichtung bekannt, wobei eine Befestigungsfläche, an der die Entnahmevorrichtung befestigt ist, schräg zu einem Tankoberseitenabschnitt einer Tankoberseite des Tanks angeordnet ist. An der Befestigungswand ist die Entnahmevorrichtung befestigt.

Es ist Aufgabe der Erfindung, ein verbessertes Tanksystem und ein verbessertes Fahrzeug, insbesondere ein verbessertes diesel-elektrisch betriebenes Schienenfahrzeug, bereitzustellen.

Diese Aufgabe wird mittels eines Tanksystems gemäß Patentanspruch 1 und eines Fahrzeugs gemäß Patentanspruch 13 gelöst. Vorteilhafte Ausführungsformen sind in den abhängigen Ansprüchen angegeben.

Es wurde erkannt, dass ein verbessertes Tanksystem dadurch bereitgestellt werden kann, dass das Tanksystem eine Entnahmevorrichtung und einen Tank umfasst, wobei die Entnahmevorrichtung eine Entnahmeleitung und eine Anschlusseinrichtung umfasst, wobei der Tank eine Tankoberseite umfasst, wobei die Tankoberseite eine Befestigungswand und einen ersten Tankoberseitenabschnitt umfasst, wobei die Begrenzungswand und der erste Tankoberseitenabschnitt oberseitig einen Tankinnenraum begrenzen, wobei der Tankinnenraum mit einer Abgasnachbehandlungsflüssigkeit füllbar ist, wobei die Befestigungswand schräg zu dem ersten Tankoberseitenabschnitt angeordnet ist, wobei die Befestigungswand eine Befestigungsfläche und eine Tanköffnung aufweist, wobei an der Befestigungsfläche die Anschlusseinrichtung befestigt ist, wobei durch die Tanköffnung die Entnahmeleitung geführt ist.

Diese Ausgestaltung hat den Vorteil, dass die Entnahmevorrichtung besonders leicht aus dem Tank für Wartungsarbeiten entnommen werden kann. Auch ist die Montage der Entnahmevorrichtung an dem Tank besonders einfach. Insbesondere kann auf eine Demontage und Montage des Tanks sowie eine Entleerung des Tanks für die Wartungsarbeiten verzichtet werden.

In einer weiteren Ausführungsform umfasst der Tank einen Tankboden einen ersten Tankbodenabschnitt und einen zweiten Tankbodenabschnitt, wobei der zweite Tankbodenabschnitt tiefer liegend als der erste Tankbodenabschnitt angeordnet und mit dem ersten Tankbodenabschnitt verbunden ist, wobei der zweite Tankbodenabschnitt parallel zum ersten Tankoberseitenabschnitt angeordnet ist, wobei der erste Tankbodenabschnitt schräg zu dem zweiten Tankbodenabschnitt angeordnet ist, wobei die Entnahmeleitung oberhalb des zweiten Tankbodenabschnitts des Tankbodens mündet und mit der Anschlusseinrichtung gekoppelt ist, wobei die Entnahmeleitung zumindest abschnittsweise schräg zu dem zweiten Tankbodenabschnitt angeordnet ist.

In einer weiteren Ausführungsform umfasst der Tank eine Tankseitenwand, wobei die Befestigungswand schräg geneigt zur Tankseitenwand angeordnet ist. Zusätzlich oder alternativ ist die Tankseitenwand senkrecht zu dem ersten Tankoberseitenabschnitt angeordnet.

In einer weiteren Ausführungsform ist die Tankseitenwand mit einem unteren Ende mit einem ersten Ende des ersten Tankbodenabschnitts verbunden, wobei ein zweites Ende des ersten Tankbodenabschnitts mit dem zweiten Tankbodenabschnitt verbunden ist, wobei der zweite Tankbodenabschnitt unterhalb des unteren Endes der Tankseitenwand und seitlich versetzt zu der Tankseitenwand angeordnet ist, wobei die Befestigungswand oberhalb des ersten Tankbodenabschnitts angeordnet ist.

In einer weiteren Ausführungsform ragt die Befestigungswand zumindest abschnittsweise über die Tankseitenwand hervor, wobei zumindest abschnittsweise die Tankseitenwand ein Speichervolumen des Tanks und die Befestigungswand ein Ausdehnungsvolumen für die Abgasnachbehandlungsflüssigkeit begrenzen. Das Ausdehnungsvolumen ist vorzusehen, um bei hohen Temperaturen der Abgasnachbehandlungsflüssigkeit ein Ausdehnen der Abgasnachbehandlungsflüssigkeit aus dem Speichervolumen in das Ausdehnungsvolumen zu ermöglichen, um eine mechanische Beschädigung des Tanks zu verhindern.

In einer weiteren Ausführungsform ist an der Tankoberseite zwischen der Befestigungswand und der Tankseitenwand eine Vertiefung vorgesehen, wobei die Vertiefung die gleiche Längserstreckung aufweist wie die Befestigungswand.

In einer weiteren Ausführungsform ragt die Befestigungswand oberseitig zumindest abschnittweise über den ersten Tankoberseitenabschnitt heraus, wobei an einem oberen Ende die Befestigungswand mit einem oberen Ende des zweiten Tankoberseitenabschnitts der Tankoberseite verbunden ist, wobei ein unteres Ende des zweiten Tankoberseitenabschnitts mit dem ersten Tankoberseitenabschnitt verbunden ist, wobei an den zweiten Tankoberseitenabschnitt und an die Befestigungswand eine vordere Begrenzungswand und eine rückseitige Begrenzungswand angrenzen, wobei die vordere Begrenzungswand und die rückseitige Begrenzungswand parallel zueinander ausgerichtet sind, wobei die vordere Begrenzungswand und die rückseitige Begrenzungswand senkrecht zu dem ersten Tankoberseitenabschnitt angeordnet sind.

In einer weiteren Ausführungsform umfasst die Entnahmeeinrichtung eine Filtereinrichtung, wobei die Entnahmeleitung ausgebildet ist, die Abgasnachbehandlungsflüssigkeit zu führen, wobei die Entnahmeleitung einen Entnahmeabschnitt und einen ersten Verbindungsabschnitt umfasst, wobei der erste Verbindungsabschnitt mit der Anschlusseinrichtung gekoppelt ist, wobei der Entnahmeabschnitt mit dem ersten Verbindungsabschnitt gekoppelt ist, wobei der erste Verbindungsabschnitt schräg geneigt zum Entnahmeabschnitt angeordnet ist, wobei der Entnahmeabschnitt senkrecht zum ersten Tankoberseitenabschnitt ausgerichtet ist, wobei die Filtereinrichtung mit dem Entnahmeabschnitt auf einer zum ersten Verbindungsabschnitt abgewandten Seite des Entnahmeabschnitts verbunden ist, wobei der erste Verbindungsabschnitt in einer ersten Ebene verlaufend angeordnet ist, wobei der Entnahmeabschnitt in einer zweiten Ebene verlaufend angeordnet ist, wobei die erste Ebene schräg zur zweiten Ebene angeordnet ist und einen ersten Winkel einschließt, wobei der erste Winkel einen Wert aufweist, wobei vorzugsweise der Wert in einem Bereich von kleiner 90° und größer 0°, wobei insbesondere der Wert in einem Bereich, von größer 0° bis 45°, wobei insbesondere der Wert in einem Bereich von 15° bis 30° liegt. Auf diese Weise wird durch die Entnahmevorrichtung ein Ansaugen von Schmutzpartikeln aus dem Tank vermieden.

In einer weiteren Ausführungsform umfasst die Entnahmeleitung einen zweiten Verbindungsabschnitt, wobei der zweite Verbindungsabschnitt zwischen dem ersten Verbindungsabschnitt und dem Entnahmeabschnitt angeordnet ist und den Entnahmeabschnitt mit dem ersten Verbindungsabschnitt verbindet, wobei der zweite Verbindungsabschnitt schräg geneigt zu dem Entnahmeabschnitt und schräg geneigt zu dem ersten Verbindungsabschnitt angeordnet ist.

In einer weiteren Ausführungsform weist das Tanksystem eine Wärmetauschereinrichtung mit einem ersten Wärmetauscherelement und einem zweiten Wärmetauscherelement auf, wobei die Wärmetauschereinrichtung mit einem Wärmeträgermedium füllbar ist, wobei das erste Wärmetauscherelement versetzt zu dem zweiten Wärmetauscherelement angeordnet ist, wobei jedes der Wärmetauscherelemente eine erste Verbindungsleitung, eine zweite Verbindungsleitung und eine Heizschlange umfasst, wobei die zweite Verbindungsleitung des ersten Wärmetauscherelements mittels einer dritten Verbindungsleitung mit der zweiten Verbindungsleitung des zweiten Wärmetauscherelements verbunden ist, wobei zwischen dem ersten Wärmetauscherelement und dem zweiten Wärmetauscherelement die Wärmetauschereinrichtung einen Schutzbereich begrenzt, wobei die Entnahmeleitung in dem Schutzbereich angeordnet ist. Dadurch kann eine besonders zuverlässige Entnahme aus dem Tank sichergestellt werden. Ferner wird die Entnahmevorrichtung im Bereich des Entnahmeabschnitts besonders kompakt ausgebildet. Ferner wird eine Beschädigung der Entnahmeleitung und/oder der Filtereinrichtung bei Montage oder Demontage der Entnahmeeinrichtung am Tank vermieden.

In einer weiteren Ausführungsform ist die erste Verbindungsleitung mit der Anschlusseinrichtung gekoppelt, wobei die erste Verbindungsleitung und die zweite Verbindungsleitung parallel zueinander angeordnet sind, wobei die erste Verbindungsleitung und die zweite Verbindungsleitung zumindest abschnittsweise parallel zum ersten Verbindungsabschnitt der Entnahmeleitung angeordnet sind, wobei die erste Verbindungsleitung in einer dritten Ebene und der erste Heizschlangenabschnitt in einer vierten Ebene angeordnet ist, wobei die dritte Ebene zu der vierten Ebene einen zweiten Winkel einschließt, wobei der zweite Winkel einen Wert aufweist, der in einem Bereich von größer 90° und kleiner 180° liegt, wobei die Heizschlange wenigstens einen ersten Heizschlangenabschnitt umfasst, wobei der erste Heizschlangenabschnitt mit der ersten Verbindungsleitung verbunden ist, wobei der erste Heizschlangenabschnitt senkrecht zum Entnahmeabschnitt angeordnet ist. Dadurch kann die Entnahmevorrichtung besonders kompakt ausgebildet werden.

In einer weiteren Ausführungsform umfasst die Heizschlange einen zweiten Heizschlangenabschnitt und einen Heizschlangenverbindungsabschnitt, wobei die zweite Verbindungsleitung mit der Heizschlange verbunden ist, wobei die zweite Verbindungsleitung zumindest abschnittsweise parallel zu der ersten Verbindungsleitung angeordnet ist, wobei der Heizschlangenverbindungsabschnitt den ersten Heizschlangenabschnitt mit dem zweiten Heizschlangenabschnitt fluidisch verbindet und auf einer zur ersten Verbindungsleitung abgewandten Seite des ersten Heizschlangenabschnitts angeordnet ist.

In einer weiteren Ausführungsform ist die Filtereinrichtung zwischen der Heizschlange des ersten Wärmetauscherelements und der Heizschlage des zweiten Wärmetauscherelements angeordnet, wobei die Filtereinrichtung vorzugweise als Flächenfilter ausgebildet ist, wobei vorzugsweise mehrere Filtereinrichtungen vorgesehen sind, die in einer Reihe parallel zu der Heizschlange angeordnet sind.

In einer weiteren Ausführungsform umfasst ein Fahrzeug ein Tanksystem, einen Längsträger und eine Fahrzeugseitenbegrenzung, wobei das Tanksystem wie oben beschrieben ausgebildet ist, wobei der Tank unter dem Längsträger angeordnet ist, wobei quer zu einer Fahrtrichtung des Fahrzeugs die Fahrzeugseitenbegrenzung und der Längsträger versetzt angeordnet sind, wobei quer zu der Fahrtrichtung die Fahrzeugseitenbegrenzung und der Längsträger zur Montage und/oder Demontage die Entnahmevorrichtung begrenzen, wobei nach unten hin der Montageraum durch die Tankoberseite des Tanks begrenzt ist, wobei das Tanksystem wenigstens eine Pumpenvorrichtung und eine Anschlussleitung umfasst, wobei die Pumpenvorrichtung eine Saugseite und eine Druckseite aufweist, wobei die Saugseite über die Anschlussleitung mit der Entnahmevorrichtung fluidisch verbunden ist, wobei die Druckseite mit einem Abgasnachbehandlungssystem des Fahrzeugs fluidisch verbindbar ist, wobei die Pumpenvorrichtung und die Anschlussleitung in dem Montageraum angeordnet sind.

In einer weiteren Ausführungsform ist die Anschlusseinrichtung schräg hin zur Fahrzeugseitenbegrenzung geneigt angeordnet. Auf diese Weise wird eine besonders leichte Zugänglichkeit zur Anschlusseinrichtung und zur erleichterten Montage und Demontage von einem an der Anschlusseinrichtung angeordneten Befestigungsmittel sichergestellt. Zusätzlich oder alternativ erstreckt sich der Tank über wenigstens 80 Prozent einer Gesamtfahrzeugbreite des Fahrzeugs. Dadurch kann das Speichervolumen des Tanks zwischen 750 l und 6000 l betragen.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
FIG 1 eine perspektivische Darstellung eines Fahrzeugs;
FIG 2 eine perspektivische Darstellung eines Antriebs des in FIG 1 gezeigten Fahrzeugs;
FIG 3 einen Ausschnitt einer Seitenansicht auf das in FIG 1 gezeigte Fahrzeug;
FIG 4 einen Ausschnitt einer Schnittansicht entlang einer in FIG 1 gezeigten Schnittebene A-A durch das Fahrzeug;
FIG 5 eine Explosionsdarstellung eines Tanksystems des in den FIGN 1 und 2 Fahrzeugs; und
FIGN 6 bis 8 verschiedene perspektivische Ansichten einer Entnahmevorrichtung des Tanksystems;
FIG 9 eine Unteransicht der Entnahmevorrichtung; und
FIG 10 eine Draufsicht auf die Entnahmevorrichtung zeigen.

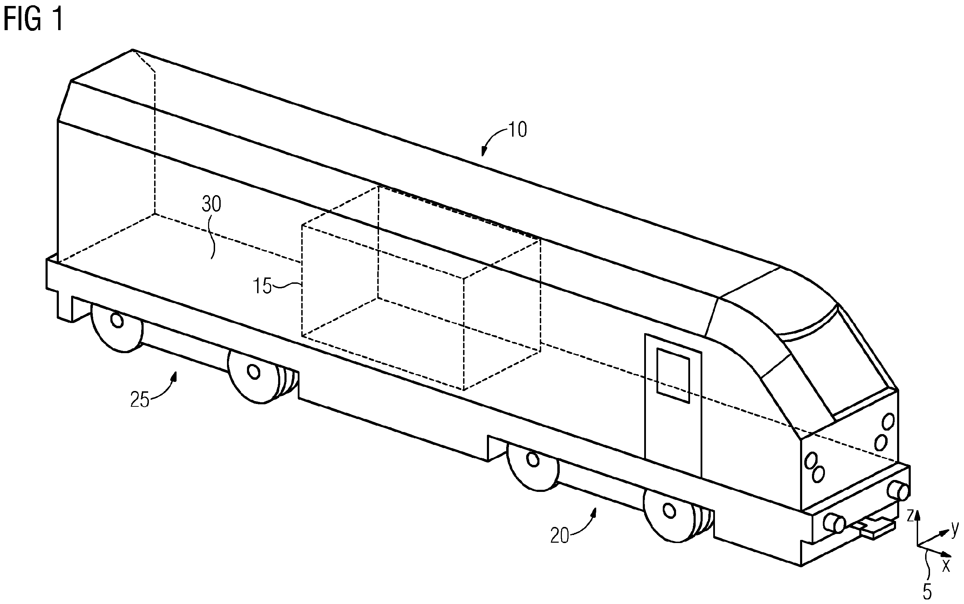

In den folgenden FIGN 1 bis 10 wird auf ein Koordinatensystem 5 Bezug genommen. Das Koordinatensystem 5 ist als Rechtssystem ausgebildet und umfasst eine x-Achse, eine y-Achse und eine z-Achse. Die x-Achse (Längsrichtung) ist dabei parallel verlaufend zur Fahrtrichtung eines Fahrzeugs 10 angeordnet. Die y-Achse ist in Querrichtung zur Fahrtrichtung angeordnet. Die z-Achse entspricht dabei einer Höhenrichtung des Fahrzeugs 10.

FIG 1 zeigt eine perspektivische Darstellung eines Fahrzeugs 10.

Das Fahrzeug 10 ist beispielhaft als schienengebundenes Fahrzeug, in der Ausführungsform beispielhaft als Lokomotive ausgebildet. Auch ist denkbar, dass das Fahrzeug 10 auch als Triebwagen oder als Kraftfahrzeug, insbesondere als Lastkraftwagen, ausgebildet ist.

Das Fahrzeug 10 umfasst eine Antriebseinheit 15, beispielhaft ein erstes Drehgestell 20, ein zweites Drehgestell 25 und einen Wagenkasten 30. Das erste Drehgestell 20 ist über den Wagenkasten 30 mit dem zweiten Drehgestell 25 und mit der Antriebseinheit 15 verbunden. Der Wagenkasten 30 ist dabei ausgebildet, die mechanischen Kräfte zwischen den Drehgestellen 20, 25 und der Antriebseinheit 15 auszutauschen.

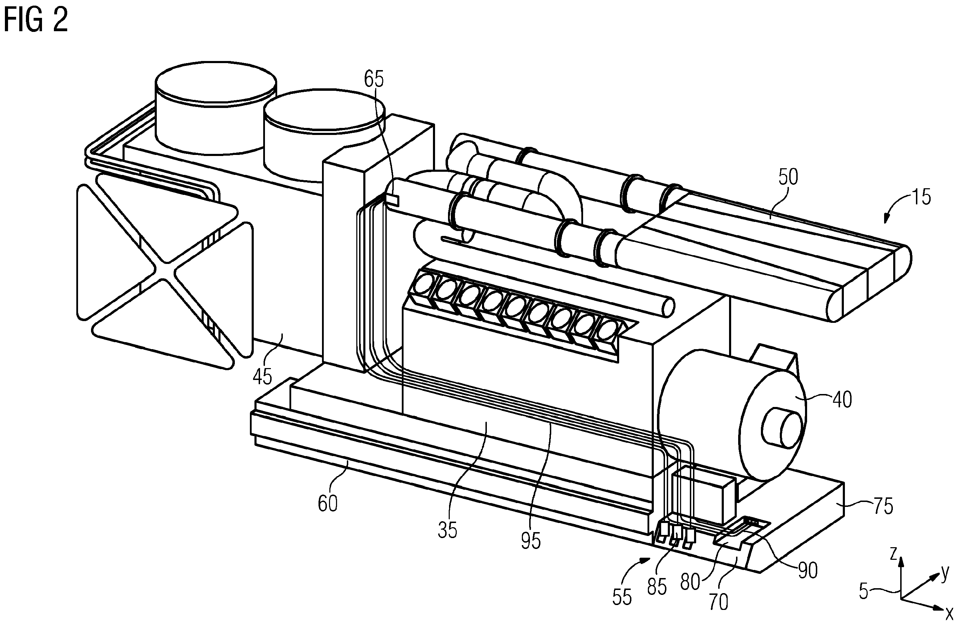

FIG 2 zeigt eine perspektivische Ansicht der Antriebseinheit 15. Die Antriebseinheit 15 umfasst einen Antriebsmotor 35, einen Generator 40, ein Kühlsystem 45, ein Abgasnachbehandlungssystem 50, ein Tanksystem 55 und einen Treibstofftank 60. Der Antriebsmotor 35 ist in der Ausführungsform beispielhaft als Dieselmotor ausgebildet. Selbstverständlich kann der Antriebsmotor 35 andersartig ausgebildet sein. Der Antriebsmotor 35 ist drehmomentschlüssig mit dem Generator 40 gekoppelt. Der Antriebsmotor 35 saugt im Betrieb aus dem Treibstofftank 60 einen Treibstoff an und verbrennt den Treibstoff nach bekannten Verfahren. Dabei stellt der Antriebsmotor 35 ein Drehmoment bereit, mit dem der Generator 40 betrieben wird, um elektrische Energie zum Antrieb des Fahrzeugs 10 bereitzustellen. Das bei der Verbrennung entstehende Abgas wird durch das Abgasnachbehandlungssystem 50 gereinigt. Die weiter bei der Verbrennung entstehende Abwärme wird über das Kühlsystem 45 aus dem Antriebsmotor 35 abgeführt, um eine Überhitzung des Antriebsmotors 35 zu verhindern.

In der Ausführungsform ist beispielhaft das Abgasnachbehandlungssystem 50 oberhalb des Antriebsmotors 35 und des Generators 40 angeordnet. Unterhalb des Antriebsmotors 35 ist der Treibstofftank 60 angeordnet. Unterhalb des Generators 40 ist das Tanksystem 55 angeordnet. In Fahrtrichtung hinter dem Antriebsmotor 35 auf einer zum Generator 40 abgewandten Seite ist das Kühlsystem 45 angeordnet. Auch können die Komponenten 35, 40, 45, 50, 55, 60 der Antriebseinheit 15 auch andersartig zueinander angeordnet sind.

Das Abgasnachbehandlungssystem 50 umfasst einen Katalysator, vorzugsweise einen SCR-Katalysator, (nicht dargestellt) und wenigstens eine Einspritzdüse 65.

Das Tanksystem 55 umfasst einen Tank 70 zur Speicherung einer Abgasnachbehandlungsflüssigkeit 75 für das Abgasnachbehandlungssystem 50. In der Ausführungsform weist die Abgasnachbehandlungsflüssigkeit 75 beispielsweise eine wässrige Harnstofflösung auf, vorzugsweise mit einem Harnstoffanteil von etwa 32,5 %. Ferner umfasst das Tanksystem 55 wenigstens eine Pumpenvorrichtung 85, wenigstens eine Anschlussleitung 90 und wenigstens eine Förderleitung 95.

Die Pumpenvorrichtung 85 weist beispielhaft wenigstens eine Pumpe 135 auf. Jede Pumpe 135 weist eine Saugseite und eine Druckseite auf. In der Ausführungsform ist beispielhaft für jede Einspritzdüse 65 jeweils eine Pumpe 135 vorgesehen. Die Druckseite der Pumpe 135 ist jeweils über eine separate Förderleitung 95 mit der der Pumpe 135 zugeordneten Einspritzdüse 65 verbunden. Ebenso ist beispielhaft für jede Pumpe 135 jeweils eine Anschlussleitung 90 vorgesehen. Die Anschlussleitung 90 ist ferner mit der Entnahmevorrichtung 80 verbunden. Auch kann eine andere Anzahl von Einspritzdüsen 65 und/oder Pumpen 135 gewählt werden.

Im Betrieb der Pumpe 135 saugt die Pumpe 135 aus dem Tank 70 die Abgasnachbehandlungsflüssigkeit 75 an. Die Pumpe 135 fördert die Abgasnachbehandlungsflüssigkeit 75 über die Förderleitung 95 hin zur Einspritzdüse 65. Die Einspritzdüse 65 spritzt die Abgasnachbehandlungsflüssigkeit 75 in den Katalysator ein.

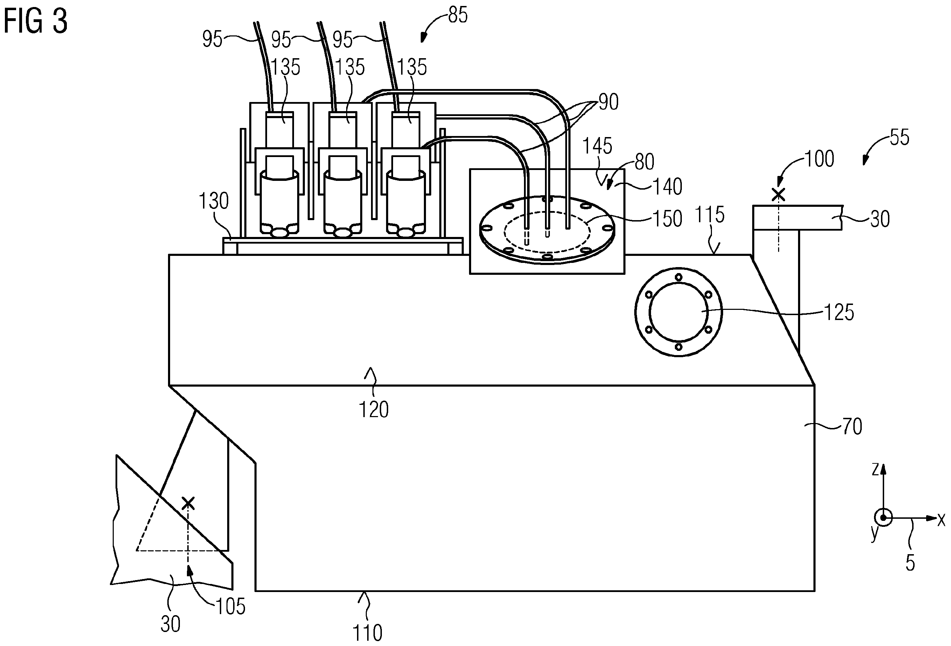

FIG 3 zeigt eine Seitenansicht auf das Tanksystem 55. Das Tanksystem 55 ist in Fahrtrichtung vorne, beispielsweise über ein erstes Befestigungsmittel 100 mit dem Wagenkasten 30 verbunden. Ferner ist der Tank 70 in Fahrtrichtung hinten über ein zweites Befestigungsmittel 105 mit dem Wagenkasten 30 verbunden.

Der Tank 70 weist unterseitig einen Tankboden 110 und oberseitig eine Tankoberseite 115 auf. Seitlich wird der Tank 70 durch eine Tankseitenwand 120 begrenzt. Die Tankseitenwand 120 ist in der Ausführungsform beispielhaft in einer xz-Ebene angeordnet. An der Tankseitenwand 120 weist der Tank 70 eine Einfüllöffnung 125 auf. An der Tankoberseite 115 ist ein Halter 130 vorgesehen, der die Pumpenvorrichtung 85 an dem Tank 70 befestigt. Die Pumpe 135 ist in Fahrtrichtung angrenzend zueinander am Halter 130 befestigt.

Die Tankoberseite 115 weist eine Befestigungswand 140 auf. Die Befestigungswand 140 ist schräg zu der Tankseitenwand 120 angeordnet. Die Befestigungswand 140 weist eine Befestigungsfläche 145 und eine Tanköffnung 150 auf. Die Befestigungswand 140 ragt über die Tankoberseite 115 hinaus nach oben hin hinaus. Dabei ist in Fahrtrichtung (x-Achse) die Befestigungswand 140 zwischen der Pumpenvorrichtung 85 und der Einfüllöffnung 125 angeordnet. Andere Anordnungspositionen für die Befestigungswand 140 sind selbstverständlich auch denkbar. Die Befestigungswand 140 ist dabei seitlich hin nach außen geneigt.

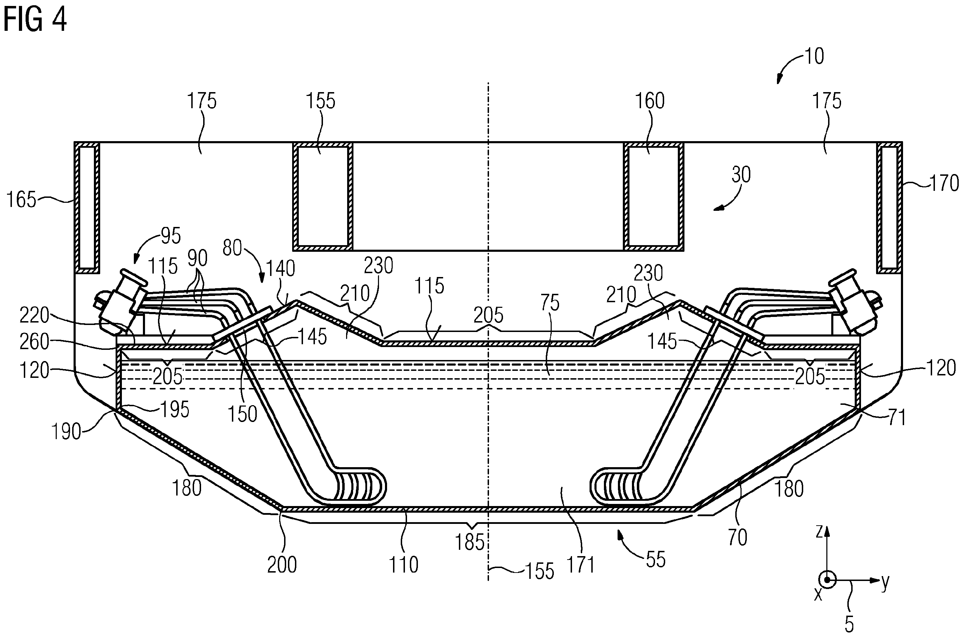

FIG 4 zeigt eine Schnittansicht entlang einer in FIG 1 gezeigten Schnittebene A-A durch das Fahrzeug 10. In der Ausführungsform ist das Tanksystem 55 symmetrisch zu einer Symmetrieebene 151, die in einer xz-Ebene angeordnet ist und vorzugsweise in der Fahrzeugmitte verläuft, ausgebildet.

Der Wagenkasten 30 weist einen ersten Längsträger 155 und einen in Querrichtung versetzt zum ersten Längsträger 155 angeordneten zweiten Längsträger 160 auf. Der Längsträger 155, 160 ist vorzugsweise als Mittellangträger ausgebildet. Der Längsträger 155, 160 verläuft dabei parallel zur x-Achse, wobei in y-Richtung der erste Längsträger 155 und der zweite Längsträger 160 vorzugsweise mit identischem Abstand zur Fahrzeugmitte angeordnet sind. Ferner umfasst das Fahrzeug 10 eine erste Fahrzeugseitenbegrenzung 165 und eine zweite Fahrzeugseitenbegrenzung 170. Die Fahrzeugseitenbegrenzungen 165, 170 sind gegenüberliegend in Querrichtung (y-Richtung) zueinander angeordnet.

Das Tanksystem 55 ist unterhalb des Längsträgers 155, 160 angeordnet. Im Wesentlichen erstreckt sich dabei der Tank 70 über einen Großteil, vorzugsweise über wenigstens 80 Prozent, einer Gesamtfahrzeugbreite des Fahrzeugs 10. Der Tank 70 begrenzt in seinem Tankinnenraum 71 ein Speichervolumen 171 zur Speicherung der Abgasnachbehandlungsflüssigkeit 75 und ein Ausdehnungsvolumen 230. Das Ausdehnungsvolumen 230 ist oberhalb des Speichervolumens 171 angeordnet.

Der Längsträger 155, 160 begrenzt zusammen mit der Fahrzeugseitenbegrenzung 165, 170 einen Montageraum 175 in Querrichtung. Der Montageraum 175 ist außermittig zur Fahrzeugmitte angeordnet. Nach unten hin wird der Montageraum 175 durch die Tankoberseite 115 und die Befestigungswand 140 begrenzt. In Querrichtung ist die Befestigungswand 140 zwischen der Fahrzeugseitenbegrenzung 165, 170 und dem Längsträger 155, 160 angeordnet. Die Pumpenvorrichtung 85 und die Anschlussleitung 90 sind in dem Montageraum 175 angeordnet.

Der Tankboden 110 weist einen ersten Tankbodenabschnitt 180 und beispielhaft wenigstens einen zweiten Tankbodenabschnitt 185 auf. Der zweite Tankbodenabschnitt 185 ist unterhalb eines unteren Endes 190 der Tankseitenwand 120 angeordnet. Ferner ist der zweite Tankbodenabschnitt 185 tiefer liegend als der erste Tankbodenabschnitt 180 angeordnet. Der zweite Tankbodenabschnitt 185 und der erste Tankoberseitenabschnitt 205 sind beispielhaft senkrecht zur Tankseitenwand 120 angeordnet. Dabei erstreckt sich beispielhaft der zweite Tankbodenabschnitt 185 in einer xy-Ebene. Die Tankseitenwand 120 ist mit ihrem unteren Ende 190 mit einem ersten Ende 195 des ersten Tankbodenabschnitts 180 verbunden. Ein nach innen hin und nach unten hin versetzt angeordnetes zweites Ende 200 des ersten Tankbodenabschnitts 180 ist mit dem zweiten Tankbodenabschnitt 185 verbunden. Ferner ist der zweite Tankbodenabschnitt 185 seitlich in Querrichtung versetzt zu der Tankseitenwand 120 angeordnet. Die Befestigungswand 140 ist vorzugsweise vollständig oberhalb des ersten Tankbodenabschnitts 180 angeordnet. Der erste Tankbodenabschnitt 180 verläuft dabei schräg zu dem zweiten Tankbodenabschnitt 185 und zu der Tankseitenwand 120. Dadurch wird seitlich am Fahrzeug 10 genügend Bodenfreiheit sichergestellt.

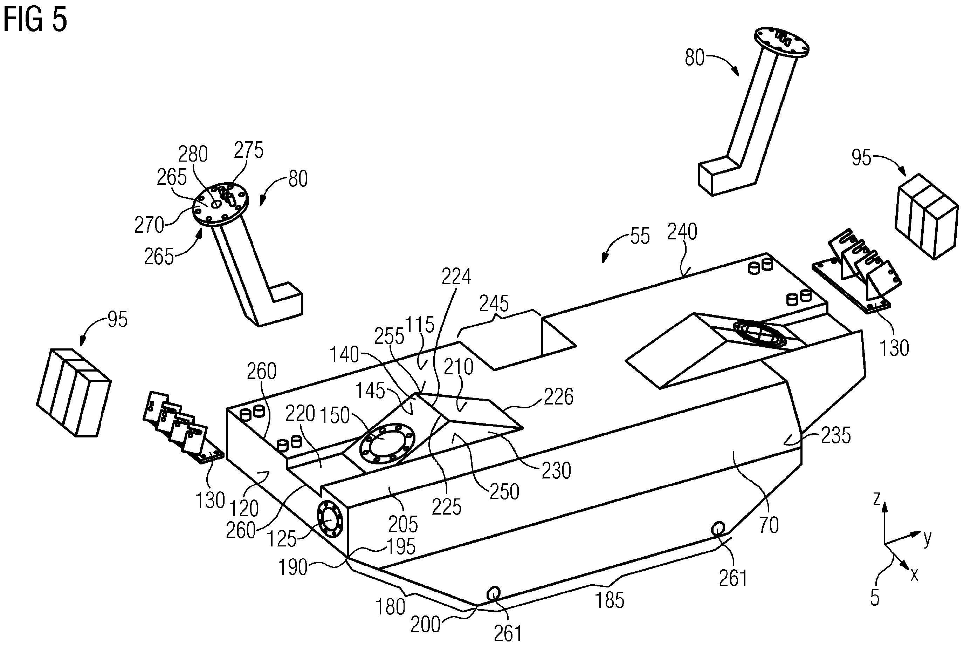

FIG 5 zeigt eine Explosionsdarstellung des in FIG 4 gezeigten Tanksystems 55.

Die Tankoberseite 115 weist ferner einen ersten Tankoberseitenabschnitt 205 und einen zweiten Tankoberseitenabschnitt 210 auf. Der erste Tankoberseitenabschnitt 205 ist plan ausgebildet und parallel zum zweiten Tankbodenabschnitt 185 angeordnet. Die Befestigungswand 140 ist zumindest abschnittsweise oberhalb einem oberen Ende 260 der Tankseitenwand 120 angeordnet. Ferner kann zusätzlich, wie in FIG 5 gezeigt, zwischen der Tankseitenwand 120 und der Befestigungswand 140 eine Vertiefung 220 in der Tankoberseite 115 vorgesehen sein, um eine erleichterte Zugänglichkeit der Befestigungswand 140 und der Entnahmevorrichtung 80 von der Fahrzeugseite her sicherzustellen. Von besonderem Vorteil ist hierbei, wenn die Vertiefung 220 die gleiche Längserstreckung (x-Richtung) aufweist wie die Befestigungswand 140.

Der zweite Tankoberseitenabschnitt 210 ist rückseitig auf einer zur Fahrzeugmitte hin zugewandten Seite angrenzend an die Befestigungswand 140 angeordnet. Der zweite Tankoberseitenabschnitt 210 ist mit einem oberen Ende 224 mit einem oberen Ende 225 der Befestigungswand 140 verbunden. Der zweite Tankoberseitenabschnitt 210 ist schräg geneigt zu dem ersten Tankoberseitenabschnitt 205 angeordnet. Ein unteres Ende 226 des zweiten Tankoberseitenabschnitts 210 ist mit dem ersten Tankoberseitenabschnitt 205 verbunden. In Längsrichtung grenzen an den zweiten Tankoberseitenabschnitt 210 und an die Befestigungswand 140 eine vordere Begrenzungswand 250 und eine rückseitige Begrenzungswand 255 an. Die vordere und die rückseitige Begrenzungswand 250, 255 sind plan ausgebildet und erstrecken sich beispielhaft parallel jeweils in einer xy-Ebene. Die Begrenzungswände 250, 255 sind senkrecht zu dem ersten Tankoberseitenabschnitt 205 angeordnet. Der zweite Tankoberseitenabschnitt 210, die Befestigungswand 140, die vordere und hintere Begrenzungswand 250, 255 begrenzen das prismenförmig ausgebildetes Ausdehnungsvolumen 230.

In x-Richtung wird der Tank 70 durch eine vordere Tankwand 235 und eine rückseitige Tankwand 240 begrenzt. Die vordere und hintere Begrenzungswand 250, 255 sind beispielhaft parallel zur vorderen Tankwand 235 angeordnet. Die vordere Tankwand 235 ist im Wesentlichen plan ausgebildet. Die rückseitige Tankwand 240 ist abschnittsweise plan ausgebildet und weist eine sich hin zur vorderen Tankwand 235 erstreckende Aussparung 245 auf.

Die Entnahmevorrichtung 80 umfasst eine Anschlusseinrichtung 265. Die Anschlusseinrichtung 265 umfasst einen Flansch 270 und wenigstens ein drittes Befestigungsmittel 275. Das dritte Befestigungsmittel 275 befestigt den Flansch 270 außenseitig an der Befestigungswand 140. Das dritte Befestigungsmittel 275 kann dabei beispielsweise eine Schraube und ein am Tank 70 angeordnetes Gewinde aufweisen, wobei die Schraube den Tank 70 durchgreift und den Flansch 270 an der Befestigungsfläche 145 anpresst.

Ferner kann die Entnahmevorrichtung 80 einen Füllstandssensor 280 aufweisen. Der Füllstandssensor 280 ist an dem Flansch 270 befestigt. Der Füllstandssensor 280 ist ausgebildet, einen Füllstand der Abgasnachbehandlungsflüssigkeit 75 im Tank 70 zu erfassen. Der Füllstandssensor 280 kann dabei beispielsweise ein Ultraschallsensorelement umfassen.

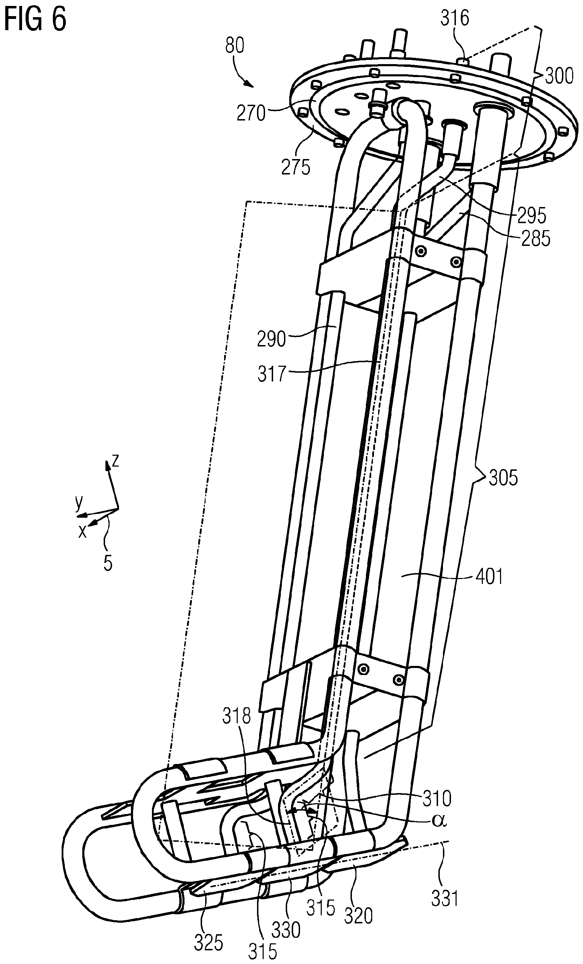

FIG 6 zeigt eine perspektivische Ansicht aus einer ersten Position auf die Entnahmevorrichtung 80. Die Entnahmevorrichtung 80 weist beispielhaft eine erste Entnahmeleitung 285, eine zweite Entnahmeleitung 290 und eine dritte Entnahmeleitung 295 auf. Die Anzahl der Entnahmeleitungen 285, 290, 295 entspricht dabei der Anzahl der Pumpen 135, die auf einer Fahrzeugseite am Halter 130 befestigt sind. Selbstverständlich ist auch denkbar, dass die Anzahl der Entnahmeleitungen 285, 290, 295 unterschiedlich zu der Anzahl der Pumpen 135 ist. Auch kann die Entnahmevorrichtung 80 eine andere als in FIG 6 gezeigte Anzahl von Entnahmeleitungen 285, 290, 295 aufweisen. Insbesondere ist auch denkbar, dass nur eine einzige Entnahmeleitung 285, 290, 295 vorgesehen ist.

Die erste Entnahmeleitung 285 weist einen Anschlussabschnitt 300, einen ersten Verbindungsabschnitt 305, einen zweiten Verbindungsabschnitt 310 und einen Entnahmeabschnitt 315 auf. Der Anschlussabschnitt 300 ist durch den Flansch 270 geführt und weist ein Anschlusselement 316 auf. An dem Anschlusselement 316 ist die Anschlussleitung 90 befestigt. Der Anschlussabschnitt 300 ist auf einer dem Anschlusselement 316 abgewandten Seite mit dem ersten Verbindungsabschnitt 305 verbunden. Auf einer zum Anschlussabschnitt 300 abgewandten Seite ist der erste Verbindungsabschnitt 305 mit dem zweiten Verbindungsabschnitt 310 verbunden. Auf einer zum ersten Verbindungsabschnitt 305 abgewandten Seite des zweiten Verbindungsabschnitts 310 ist der zweite Verbindungsabschnitt 310 mit den Entnahmeabschnitt 315 verbunden. Der zweite Verbindungsabschnitt 310 ist zwischen dem ersten Verbindungsabschnitt 305 und dem Entnahmeabschnitt 315 angeordnet und verbindet den Entnahmeabschnitt 315 mit dem ersten Verbindungsabschnitt 305. Der zweite Verbindungsabschnitt 310 ist schräg zum Entnahmeabschnitt 315 und schräg zum ersten Verbindungsabschnitt 305 geneigt. Der erste Verbindungsabschnitt 305 der ersten Entnahmeleitung 285 ist dabei senkrecht zu dem Flansch 270 verlaufend angeordnet. Ferner ist der erste Verbindungsabschnitt 305 schräg zum Entnahmeabschnitt 315 und zum zweiten Tankbodenabschnitt 185 angeordnet. Der Entnahmeabschnitt 315 ist senkrecht zum zweiten Tankbodenabschnitt 185 angeordnet.

Der erste Verbindungsabschnitt 305 ist dabei in einer ersten Ebene 317 angeordnet. Der Entnahmeabschnitt 315 ist in einer zweiten Ebene 318 angeordnet. Die erste Ebene 317 ist zur zweiten Ebene 318 schräg geneigt. Dabei schließt die erste Ebene 317 zur zweiten Ebene 318 einen ersten Winkel α ein, der einen Wert aufweist, der in einem Bereich von 0° bis 90° liegt. Vorzugsweise liegt der Wert in einem Bereich zwischen 0° und 45°. Vorzugsweise ist die zweite Ebene 318 senkrecht zum zweiten Tankbodenabschnitt 185 angeordnet.

Ferner weist die Entnahmevorrichtung 80 eine erste Filtereinrichtung 320, eine zweite Filtereinrichtung 325 und eine dritte Filtereinrichtung 330 auf. Die Filtereinrichtung 320, 325, 330 ist als Flächenfilter beispielhaft ausgebildet. Die Filtereinrichtungen 320, 325, 330 sind in einer Reihe 331 in einer yz-Ebene angeordnet. Die erste Filtereinrichtung 320 ist auf einer dem zweiten Verbindungsabschnitt 310 abgewandten Seite des Entnahmeabschnitts 315 mit dem Entnahmeabschnitt 315 verbunden und oberhalb des zweiten Tankbodenabschnitts 185 zusammen mit dem Entnahmeabschnitt 315 angeordnet. Ferner sind die Filtereinrichtungen 320, 325, 330 in Längsrichtung zwischen dem ersten Heizschlangenabschnitt 385 des ersten Wärmetauscherelements 355 und dem ersten Heizschlangenabschnitt 385 des zweiten Wärmetauscherelements 360 angeordnet. Die Reihe 331 der Filtereinrichtungen 320, 325, 330 ist parallel zu dem ersten Heizschlangenabschnitt 385 angeordnet.

Die zweite Entnahmeleitung 290 und die dritte Entnahmeleitung 295 sind ähnlich zur ersten Entnahmeleitung 285 ausgebildet und weisen die gleiche Abschnitte 300, 305, 310, 315 auf. Abweichend dazu ist der Anschlussabschnitt 300 zum ersten Verbindungsabschnitt 305 andersartig ausgebildet, um am Flansch 270 jeweils einen unterschiedliche Lage zum Anschluss der Anschlussleitung 90 bereitzustellen. Ebenso ist der zweite Verbindungsabschnitt 310 der zweiten Entnahmeleitung 290 und der zweite Verbindungsabschnitt 310 der dritten Entnahmeleitung 295 andersartig geneigt zum ersten Verbindungsabschnitt 305 der jeweiligen (zweiten und dritten) Entnahmeleitung 290, 295, um so jeweils einen versetzten Verlauf des Entnahmeabschnitts 315 der zweiten Entnahmeleitung 290 und der dritten Entnahmeleitung 295 sicherzustellen. Die Entnahmeleitungen 285, 290, 295 sind dabei so ausgebildet, dass die Anschlussabschnitte 300 der jeweiligen Entnahmeleitungen 285, 290, 295 in einer Reihe am Flansch 270 angeordnet sind, wobei die Reihe parallel zur x-Achse verläuft.

Die zweite Filtereinrichtung 325 ist dabei mit dem Entnahmeabschnitt 315 der zweiten Entnahmeleitung 290 und die dritte Filtereinrichtung 330 ist mit dem Entnahmeabschnitt 315 der dritten Entnahmeleitung 295 verbunden. Gemeinsam ist den Entnahmeleitungen 285, 290, 295, dass der erste Verbindungsabschnitt 305 schräg geneigt zum jeweiligen Entnahmeabschnitt 315 der Entnahmeleitung 285, 290, 295 verläuft. Ferner verläuft der jeweilige erste Verbindungsabschnitt 305 parallel zum ersten Verbindungsabschnitt 305 der anderen Entnahmeleitung 290, 295.

Es wird darauf hingewiesen, dass die in FIG 6 beschriebene Ausgestaltung der Entnahmeleitung 285, 290, 295 auch andersartig sein kann. Insbesondere ist hierbei denkbar, dass auf den zweiten Verbindungsabschnitt 310 verzichtet wird. Auch ist denkbar, dass anstatt der in FIG 6 gezeigten gebogenen Ausgestaltung des Anschlussabschnitts 300 der Anschlussabschnitt 300 geradlinig, insbesondere als Fortführung des ersten Verbindungsabschnitts 305, ausgebildet ist.

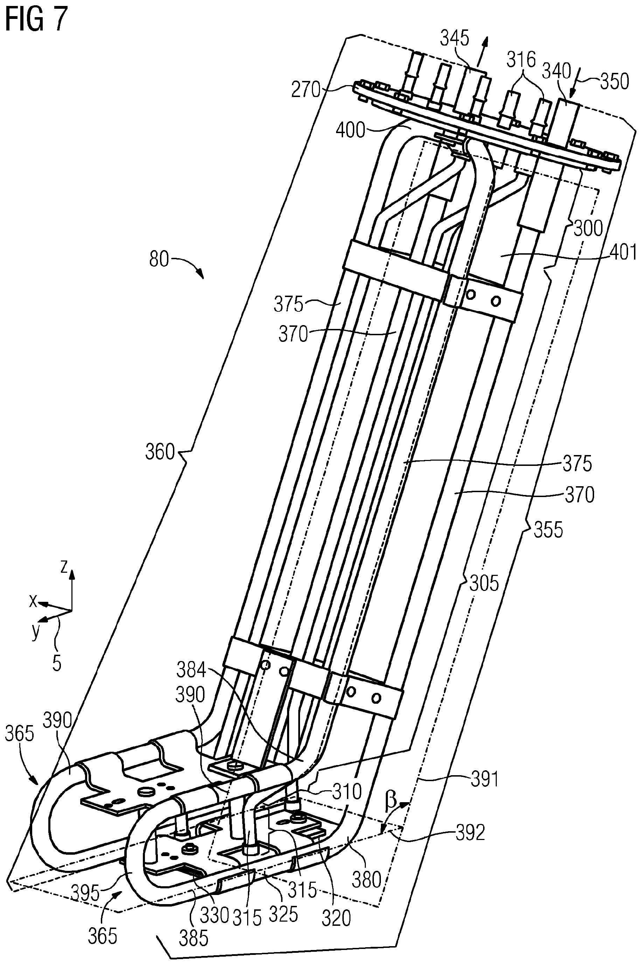

FIG 7 zeigt eine perspektivische Ansicht der Entnahmevorrichtung 80 aus einer zweiten Position. Die Entnahmevorrichtung 80 weist fakultativ zusätzlich eine Wärmetauschereinrichtung 335 auf.

Die Wärmetauschereinrichtung 335 weist einen Zulauf 340 und einen Rücklauf 345 auf. Der Zulauf 340 ist dabei mit dem Kühlsystem 45 der Antriebseinheit 15 verbunden. Dabei wird über den Zulauf 340 ein Wärmeträgermedium 350 des Kühlsystems 45 zur Wärmetauschereinrichtung 335 gefördert. Über den Rücklauf 345 wird das abgekühlte Wärmeträgermedium 350 zurück zum Kühlsystem 45 der Antriebseinheit 15 gefördert. Die Wärmetauschereinrichtung 335 weist ein erstes Wärmetauscherelement 355 und beispielhaft ein zweites Wärmetauscherelement 360 auf.
Das erste Wärmetauscherelement 355 weist eine Heizschlange 365, eine erste Verbindungsleitung 370 und eine zweite Verbindungsleitung 375 auf. Die erste Verbindungsleitung und die zweite Verbindungsleitung 370, 375 des ersten Wärmetauscherelements 355 sind parallel zueinander angeordnet. Ferner ist die erste Verbindungsleitung 370 und die zweite Verbindungsleitung 375 des ersten Wärmetauscherelements 355 parallel zum ersten Verbindungsabschnitt 305 der Entnahmeleitung 285, 290, 295 verlaufend angeordnet. Die erste Verbindungsleitung 370 des ersten Wärmetauscherelements 355 ist durch den Flansch 270 geführt und wird mechanisch durch diesen befestigt. Die erste Verbindungsleitung 370 des ersten Wärmetauscherelements 355 verbindet fluidisch den Zulauf 340 mit einer Eingangsseite 380 der Heizschlange 365 des ersten Wärmetauscherelements 355. Eine Ausgangsseite 384 der ersten Heizschlange 365 des ersten Wärmetauscherelements 355 ist mit der zweiten Verbindungsleitung 375 des ersten Wärmetauscherelements 355 verbunden.

Die Heizschlange 365 des ersten Wärmetauscherelements 355 weist einen ersten Heizschlangenabschnitt 385, einen zweiten Heizschlangenabschnitt 390 und einen Heizschlangenverbindungsabschnitt 395 auf. Der erste Heizschlangenabschnitt 385 ist mit der ersten Verbindungsleitung 370 verbunden. Mit dem zweiten Heizschlangenabschnitt 390 ist der erste Heizschlangenabschnitt 385 über den Heizschlangenverbindungsabschnitt 395 verbunden. Der erste Heizschlangenabschnitt 385 und der zweite Heizschlangenabschnitt 390 sind dabei in z-Richtung versetzt zueinander übereinander angeordnet. Dabei sind der erste Heizschlangenabschnitt 385 und der zweite Heizschlangenabschnitt 390 oberhalb des zweiten Tankbodenabschnitts 185 und parallel zum zweiten Tankbodenabschnitt 185 angeordnet. Ferner ist der erste Heizschlangenabschnitt 385 und beispielhaft auch der zweite Heizschlangenabschnitt 390 senkrecht zum Entnahmeabschnitt 315 angeordnet. Der Heizschlangenverbindungsabschnitt 395 ist auf einer zur Verbindungsleitung 370, 375 abgewandten Seite des Heizschlangenabschnitts 385, 390 angeordnet.

Dabei ist der erste Heizschlangenabschnitt 385 unterhalb des zweiten Heizschlangenabschnitts 390 angeordnet. Der Heizschlangenverbindungsabschnitt 395 ist beispielhaft bogenförmig ausgebildet. Ferner ist die erste Verbindungsleitung 370 des ersten Wärmetauscherelements 355 in einer dritten Ebene 391 und der erste Heizschlangenabschnitt 385 des ersten Wärmetauscherelements 355 in einer vierten Ebene 392 angeordnet, wobei die dritte Ebene 391 zu der vierten Ebene 392 in einem zweiten Winkel β angeordnet ist, wobei der zweite Winkel β einen Wert aufweist, der in einem Bereich von größer 90° und kleiner 180° liegt.

Das zweite Wärmetauscherelement 360 ist identisch zum ersten Wärmetauscherelement 355 ausgebildet und weist die Heizschlange 365, die erste Verbindungsleitung 370 und die zweite Verbindungsleitung 375 auf. Abweichend ist anstatt des Zulaufs 340 der Rücklauf 345 am zweiten Wärmetauscherelement 360 angeordnet. Das zweite Wärmetauscherelement 360 ist in Längsrichtung (x-Richtung) versetzt zu dem ersten Wärmetauscherelement 355 angeordnet. Die erste Verbindungsleitung 370 des zweiten Wärmetauscherelements 360 ist mit dem Rücklauf 345 fluidisch verbunden. Ferner ist die zweite Verbindungsleitung 375 des ersten Wärmetauscherelements 355 über eine dritte Verbindungsleitung 400 der Wärmetauschereinrichtung 335 mit der zweiten Verbindungsleitung 375 des zweiten Wärmetauscherelements 360 fluidisch verbunden. Die dritte Verbindungsleitung ist innenseitig am Flansch 270 angeordnet.

Das erste Wärmetauscherelement 355 und das zweiten Wärmetauscherelement 360 begrenzen einen Schutzbereich 401. In dem Schutzbereich 401 sind die Entnahmeleitungen 285, 290, 295 sowie die Filtereinrichtungen 320, 325, 330 angeordnet.

Im Betrieb der Antriebseinheit 15 wird das Wärmeträgermedium 350 über den Zulauf 340 in das erste Wärmetauscherelement 355 eingeleitet und strömt durch die erste Verbindungsleitung 370 zu der Eingangsseite 380 der Heizschlange 365 des ersten Wärmetauscherelements 355. Nach Durchströmen der Heizschlange 365 des ersten Wärmetauscherelements 355 strömt das Wärmeträgermedium 350 über die Ausgangsseite 384 der Heizschlange 365 über die zweite Verbindungsleitung 375 nach oben in Richtung des Flanschs 370. Auf einer Tankinnenseite wird das Wärmeträgermedium 350 durch die dritte Verbindungsleitung 400 zur ersten Verbindungsleitung 370 des zweiten Wärmetauscherelements 360 geführt. Das zweite Wärmetauscherelement 360 wird vom Wärmeträgermedium 350 gegenüber dem ersten Wärmetauscherelement 355 in umgekehrter Richtung durch das Wärmeträgermedium 350 geströmt. Dabei ist die Eingangsseite 380 der Heizschlange 365 mit der Ausgangsseite 384 der Heizschlange 365 vertauscht. Die zweite Verbindungsleitung 375 führt das Wärmeträgermedium 350 hin zur Heizschlange 365 des zweiten Wärmetauscherelements 360. Aus der Heizschlange 365 wird das Wärmeträgermedium 350 über die erste Verbindungsleitung 370 hin zum Rücklauf 345 geführt.

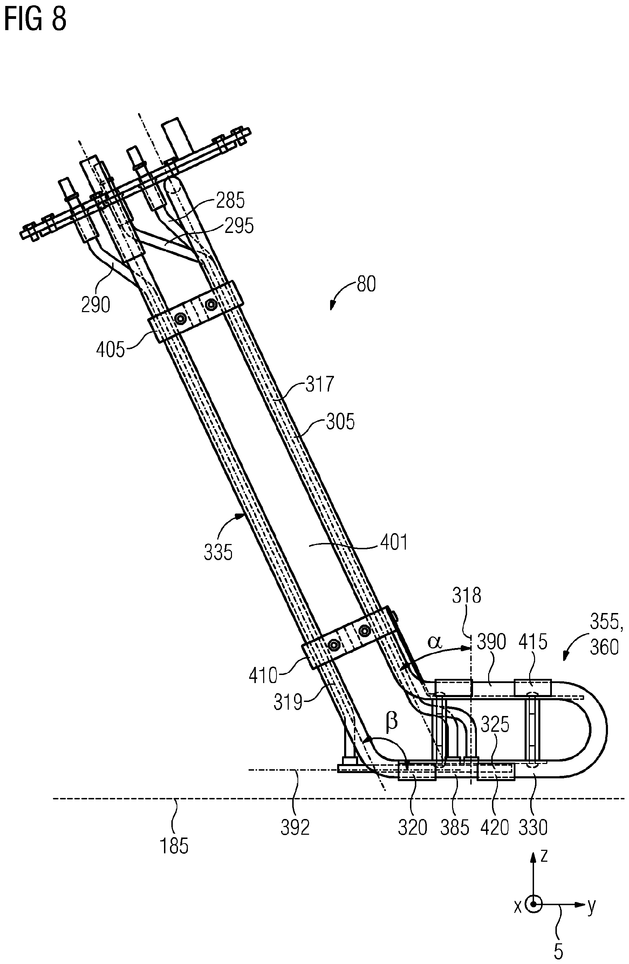

FIG 8 zeigt eine Seitenansicht auf die Entnahmevorrichtung 80.

Die Entnahmevorrichtung 80 weist ferner ein erstes Verbindungsmittel 405 und beispielhaft ein zweites Verbindungsmittel 410 auf. Das erste Verbindungsmittel 405 und das zweite Verbindungsmittel 410 sind in Richtung zum ersten Verbindungsabschnitt 305 der Entnahmeleitung 285, 290, 295 versetzt angeordnet. Dabei verbindet das erste und zweite Verbindungsmittel 405, 410 das erste Wärmetauscherelement 355 mit dem zweiten Wärmetauscherelement 360 im Bereich der ersten Verbindungsleitung 370 und der zweiten Verbindungsleitung 375. Ferner wird der erste Verbindungsabschnitt 305 der einzelnen Entnahmeleitungen 285, 290, 295 miteinander verbunden. Diese Ausgestaltung hat den Vorteil, dass Vibrationen in der Entnahmeleitung 285, 290, 295 und in der Wärmetauschereinrichtung 335 vermieden werden.

Ferner ist ein drittes Verbindungselement 415 vorgesehen. Das dritte Verbindungselement 415 ist dabei plattenartig ausgebildet und verbindet dabei den zweiten Heizschlangenabschnitt 390 des ersten Wärmetauscherelements 355 mit dem zweiten Heizschlangenabschnitt 390 des zweiten Wärmetauscherelements 360. Ferner kann beispielhaft ein viertes Verbindungselement 420 vorgesehen sein. Das vierte Verbindungsmittel 420 ist plattenförmig ausgebildet. Das vierte Verbindungselement 420 verbindet den ersten Heizschlangenabschnitt 385 mit dem ersten Heizschlangenabschnitt 385 des zweiten Wärmetauscherelements 360. Unterhalb zwischen dem zweiten Tankbodenabschnitt 210 und dem vierten Verbindungsmittel 420 ist die Filtereinrichtung 320, 325, 330 angeordnet.

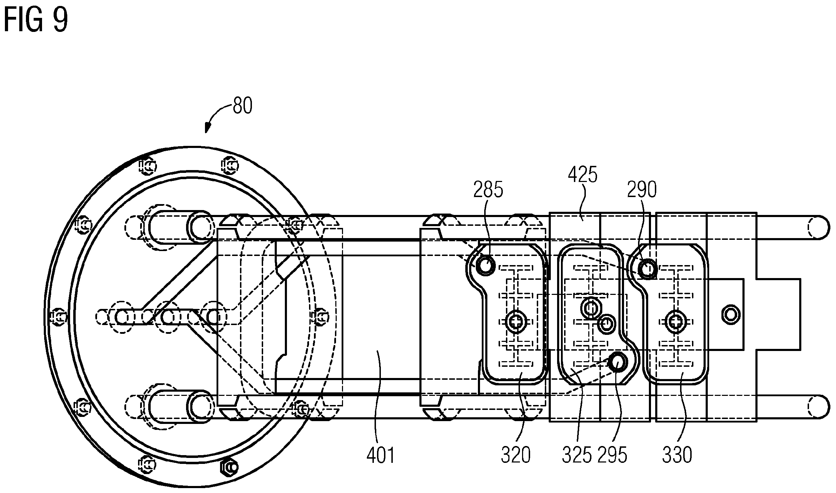

FIG 9 zeigt eine Unteransicht der Entnahmevorrichtung 80.

Ferner ist unterseitig des vierten Verbindungselements 420 zwischen dem zweiten Tankbodenabschnitt 185 und dem vierten Verbindungselement 420 die Filtereinrichtung 320, 325, 330 angeordnet. Dadurch wird eine zuverlässige vollständige Entnahme der Abgasnachbehandlungsflüssigkeit 75 aus dem Tank 70 sichergestellt. Ferner sorgt die Filtereinrichtung 320, 325, 330 dafür, dass Schmutzpartikel nicht aus dem Tank 70 gefördert werden.

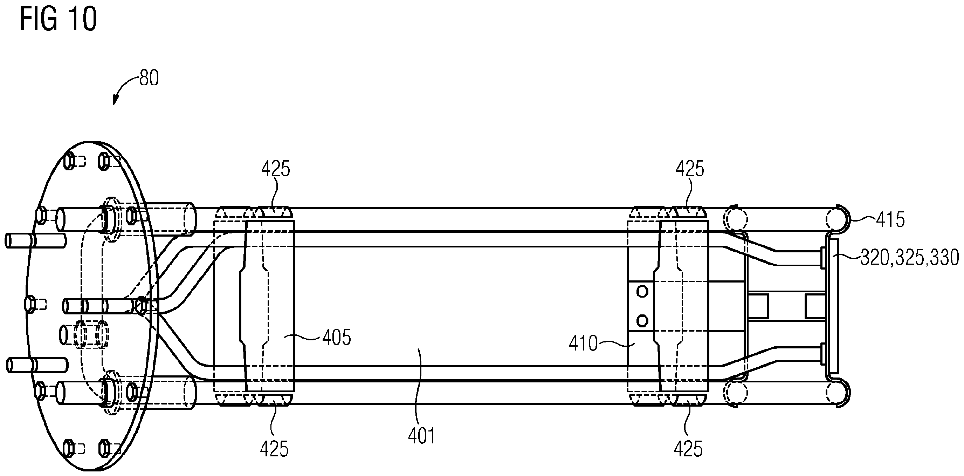

FIG 10 zeigt eine Draufsicht auf die Entnahmevorrichtung 80. Das erste Verbindungsmittel 405 und das zweite Verbindungsmittel 410 sind dabei blockförmig ausgebildet und weisen jeweils ein Spannmittel 425 auf, um die Wärmetauscherelemente 355, 360 und die Entnahmeleitung 285, 290, 295 zuverlässig miteinander zu fixieren.

Die in den FIGN 1 bis 10 beschriebene Ausgestaltung des Fahrzeugs 10 mit dem Tanksystem 55 hat den Vorteil, dass die Entnahmevorrichtung 80 hin zur Fahrzeugseitenbegrenzung 165, 170 geneigt ist und auf diese Weise die Entnahmevorrichtung 80 auf einfache Weise aus dem Tank 70 entnommen werden kann. Ferner wird durch die oben beschriebene Ausgestaltung sichergestellt, dass trotz seitlich versetzter Anordnung der Anschlusseinrichtung 265 am Tank 70 seitlich nach außen in Richtung der Fahrzeugwand 165, 170 eine zuverlässige Entnahme von der Abgasreinigungsflüssigkeit 75 aus dem tiefsten Bereich des Tanks 70 oberhalb des zweiten Tankbodenabschnitts 185 sichergestellt ist und das Speichervolumen 171 zuverlässig im Wesentlichen vollständig durch die Entnahmevorrichtung 80 aus dem Tank 70 entnommen werden kann.

Um den Tank zu reinigen, wird das zweite Befestigungsmittel 410 gelöst. Ferner wird der Zulauf 340 und der Rücklauf 345 von dem Kühlsystem 45 abgekoppelt. Des Weiteren wird die Anschlussleitung 90 von dem Anschlussabschnitt 300 der jeweiligen Entnahmeleitung 285, 290, 295 abgekoppelt. Danach wird die Entnahmevorrichtung 80 mit der Anschlusseinrichtung 265 hin in den Montageraum 175 voran eingeführt. Dabei wird gegebenenfalls die Entnahmevorrichtung 80 verdreht. Im Anschluss daran wird Entnahmevorrichtung um die x-Achse gekippt und die Heizschlange 365 voran zwischen Tankoberseite 115 und der Fahrzeugseitenbegrenzung 165, 170 durchgeführt. Die Montage der Entnahmevorrichtung 80 erfolgt in umgekehrter Reihenfolge.

Die in den FIGN 1 bis 10 beschriebene Ausgestaltung hat den Vorteil, dass durch die Tanköffnung 150 der Tank 70 besonders leicht gereinigt werden kann. Zusätzlich kann hierfür am Tank 70 eine Abflussöffnung 261 vorgesehen sein, die angrenzend an den zweiten Tankbodenabschnitt 185 unten angeordnet ist. Dadurch kann durch die Tanköffnung 150 beispielsweise eine Düse eines Luftdruckreinigers geführt werden, um den Tank 70 innenseitig zu reinigen. Das verwendete Reinigungsmittel kann dadurch über die Abflussöffnung 261 aus dem Tank 70 geführt werden.

Durch die erleichterte Demontage und aufgrund der erleichterten Montage der Entnahmevorrichtung 80 kann besonders leicht die Filtereinrichtung 320, 325, 330 gewartet werden. Insbesondere kann ein Filterelement der Filtereinrichtung 320, 325, 330 besonders leicht getauscht werden. Ferner kann durch die erhöhte Anzahl von Entnahmeleitungen 285, 290, 295 pro Entnahmevorrichtung 80 eine größere Menge von Abgasnachbehandlungsflüssigkeit 75 aus dem Tank 70 entnommen werden.

Ferner wird durch den Schutzbereich 401 eine Beschädigung der Filtereinrichtungen 320, 325, 330 sowie der Entnahmeleitungen 285, 290, 295 verhindert. Die Verbindungsmittel 405, 410, 415, 420 stützen die Entnahmeleitungen 285, 290, 295 sowie die Wärmetauschereinrichtung 335 und versteifen die Entnahmevorrichtung 80, so dass diese besonderes gut gegen Beschädigung bei der Montage und/oder Demontage geschützt sind.

Auf diese Weise ist pro Tank 70 eine geringere Anzahl von Entnahmevorrichtungen 80 vorzusehen. In der Ausführungsform kann beispielsweise pro Fahrzeugseite die Anzahl der Entnahmevorrichtungen 80 auf jeweils eine Entnahmevorrichtung 80 reduziert werden. Des Weiteren wird vermieden, dass zur Wartung der Entnahmevorrichtung 80 der Tank 70 selbst vom Wagenkasten 30 gelöst werden muss.

Durch die seitliche Anordnung der Pumpeneinrichtung 85 oberhalb der Tankseitenwand 120 kann die jeweilige Pumpe 135 ebenso besonders leicht gewartet werden. Insbesondere kann, sofern die Pumpe 135 einen weiteren Filter aufweist, der Filter der Pumpe 135 besonders einfach getauscht werden.

Das oben beschriebene Fahrzeug 10 hat durch die Ausgestaltung des Tanksystems 55 den Vorteil, dass durch die erleichterte Wartungsfreundlichkeit das Fahrzeug 10 besonders kostengünstig betrieben werden kann.

Hieraus können vom Fachmann andere Variationen abgeleitet werden, sofern diese durch die Ansprüche gedeckt sind.

## Patentansprüche

1. Tanksystem (55) für ein Fahrzeug (10)
- mit einer Entnahmevorrichtung (80) und einem Tank (70),
- wobei die Entnahmevorrichtung (80) eine Entnahmeleitung (285, 290, 295) und eine Anschlusseinrichtung (265) umfasst,
- wobei der Tank (70) eine Tankoberseite (115) umfasst,
- wobei die Tankoberseite (115) eine Befestigungswand (140) und einen ersten Tankoberseitenabschnitt (205) umfasst,
- wobei die Befestigungswand (140) und der erste Tankoberseitenabschnitt (205) oberseitig einen Tankinnenraum (71) begrenzen,
- wobei der Tankinnenraum (71) mit einer Abgasnachbehandlungsflüssigkeit (75) füllbar ist,
- wobei die Befestigungswand (140) schräg zu dem ersten Tankoberseitenabschnitt (205) angeordnet ist,
- wobei die Befestigungswand (140) eine Befestigungsfläche (145) und eine Tanköffnung (150) aufweist,
- wobei an der Befestigungsfläche (145) die Anschlusseinrichtung (265) befestigt ist,
- wobei durch die Tanköffnung (150) die Entnahmeleitung (285, 290, 295) geführt ist,
- wobei der Tank (70) einen Tankboden (110) mit einem ersten Tankbodenabschnitt (180) und einen zweiten Tankbodenabschnitt (185) umfasst,
- wobei der zweite Tankbodenabschnitt (185) tiefer liegend als der erste Tankbodenabschnitt (180) angeordnet und mit dem ersten Tankbodenabschnitt (180) verbunden ist,
- wobei der zweite Tankbodenabschnitt (185) parallel zum ersten Tankoberseitenabschnitt (205) angeordnet ist,
- wobei die Entnahmeleitung (285, 290, 295) zumindest abschnittsweise schräg zu dem zweiten Tankbodenabschnitt (185) angeordnet ist,
**dadurch gekennzeichnet, dass** der erste Tankbodenabschnitt (180) schräg zu dem zweiten Tankbodenabschnitt (185) angeordnet ist,
- die Entnahmeleitung (285, 290, 295) oberhalb des zweiten Tankbodenabschnitts (185) des Tankbodens (110) mündet und mit der Anschlusseinrichtung (265) gekoppelt ist,
- wobei die Befestigungswand (140), vorzugsweise vollständig, oberhalb des ersten Tankbodenabschnitts (180) angeordnet ist.

2. Tanksystem (55) nach Anspruch 1,
- wobei der Tank (70) eine Tankseitenwand (120) umfasst,
- wobei die Befestigungswand (140) schräg geneigt zur Tankseitenwand (120) angeordnet ist,
- und/oder
- wobei die Tankseitenwand (120) senkrecht zu dem ersten Tankoberseitenabschnitt (205) angeordnet ist.

3. Tanksystem (55) nach Anspruch 2,
- wobei die Tankseitenwand (120) mit einem unteren Ende (190) mit einem ersten Ende (195) des ersten Tankbodenabschnitts (180) verbunden ist,
- wobei ein zweites Ende (200) des ersten Tankbodenabschnitts (180) mit dem zweiten Tankbodenabschnitt (185) verbunden ist,
- wobei der zweite Tankbodenabschnitt (185) unterhalb des unteren Endes (190) der Tankseitenwand (120) und seitlich versetzt zu der Tankseitenwand (120) angeordnet ist,
- wobei die Befestigungswand (140) oberhalb des ersten Tankbodenabschnitts (180) angeordnet ist.

4. Tanksystem (55) nach Anspruch 3,
- wobei die Befestigungswand (140) zumindest abschnittsweise über die Tankseitenwand (120) hervorragt,
- wobei zumindest abschnittsweise die Tankseitenwand (120) ein Speichervolumen (171) des Tanks (70) und die Befestigungswand (140) ein Ausdehnungsvolumen (230) für die Abgasnachbehandlungsflüssigkeit (75) begrenzen.

5. Tanksystem nach einem der Ansprüche 2 bis 4,
- wobei an der Tankoberseite (115) zwischen der Befestigungswand (140) und der Tankseitenwand (120) eine Vertiefung (220) vorgesehen ist,
- wobei die Vertiefung (220) die gleiche Längserstreckung aufweist wie die Befestigungswand (140).

6. Tanksystem nach einem der vorhergehenden Ansprüche,
- wobei die Befestigungswand (140) oberseitig zumindest abschnittsweise über den ersten Tankoberseitenabschnitt (205) herausragt,
- wobei an einem oberen Ende (225) die Befestigungswand (140) mit einem oberen Ende (224) des zweiten Tankoberseitenabschnitts (210) der Tankoberseite (115) verbunden ist,
- wobei ein unteres Ende (226) des zweiten Tankoberseitenabschnitt (210) mit dem ersten Tankoberseitenabschnitt (205) verbunden ist,
- wobei an den zweiten Tankoberseitenabschnitt (210) und an die Befestigungswand (140) eine vordere Begrenzungswand (250) und eine rückseitige Begrenzungswand (255) angrenzen,
- wobei die vordere Begrenzungswand (250) und die rückseitige Begrenzungswand (255) parallel zueinander ausgerichtet sind,
- wobei die vordere Begrenzungswand (250) und die rückseitige Begrenzungswand (255) senkrecht zu dem ersten Tankoberseitenabschnitt (205) angeordnet sind.

7. Tanksystem (55) nach einem der vorhergehenden Ansprüche,
- wobei die Entnahmeeinrichtung eine Filtereinrichtung (320, 325, 330) umfasst,
- wobei die Entnahmeleitung (285, 290, 295) ausgebildet ist, die Abgasnachbehandlungsflüssigkeit (75) zu führen,
- wobei die Entnahmeleitung (285, 290, 295) einen Entnahmeabschnitt (315) und einen ersten Verbindungsabschnitt (305) umfasst,
- wobei der erste Verbindungsabschnitt (305) mit der Anschlusseinrichtung (260) gekoppelt ist,
- wobei der Entnahmeabschnitt (315) mit dem ersten Verbindungsabschnitt (305) gekoppelt ist,
- wobei der erste Verbindungsabschnitt (305) schräg geneigt zum Entnahmeabschnitt (315) angeordnet ist,
- wobei der Entnahmeabschnitt (315) senkrecht zum ersten Tankoberseitenabschnitt (205) ausgerichtet ist,
- wobei die Filtereinrichtung (320, 325, 330) mit dem Entnahmeabschnitt (315) auf einer zum ersten Verbindungsabschnitt (305) abgewandten Seite des Entnahmeabschnitts (315) verbunden ist,
- wobei der erste Verbindungsabschnitt (305) in einer ersten Ebene (317) verlaufend angeordnet ist,
- wobei der Entnahmeabschnitt (315) in einer zweiten Ebene (318) verlaufend angeordnet ist,
- wobei die erste Ebene (317) schräg zur zweiten Ebene (317) angeordnet ist und einen ersten Winkel (α) einschließen,
- wobei der erste Winkel (α) einen Wert aufweist,
- wobei vorzugsweise der Wert in einem Bereich von kleiner 90° und größer 0°,
- wobei insbesondere der Wert in einem Bereich, von größer 0° bis 45°,
- wobei insbesondere der Wert in einem Bereich, von 15° bis 30°, liegt.

8. Tanksystem (55) nach Anspruch 7,
- wobei die Entnahmeleitung (285, 290, 295) einen zweiten Verbindungsabschnitt (310) umfasst,
- wobei der zweite Verbindungsabschnitt (310) zwischen dem ersten Verbindungsabschnitt (305) und dem Entnahmeabschnitt (315) angeordnet ist und den Entnahmeabschnitt (315) mit dem ersten Verbindungsabschnitt (305) verbindet,
- wobei der zweite Verbindungsabschnitt (310) schräg geneigt zu dem Entnahmeabschnitt (315) und schräg geneigt zu dem ersten Verbindungsabschnitt (305) angeordnet ist.

9. Tanksystem (55) nach einem der vorhergehenden Ansprüche,
- aufweisend eine Wärmetauschereinrichtung (335) mit einem ersten Wärmetauscherelement (355) und einem zweiten Wärmetauscherelement (360),
- wobei die Wärmetauschereinrichtung (335) mit einem Wärmeträgermedium (350) füllbar ist,
- wobei das erste Wärmetauscherelement (355) versetzt zu dem zweiten Wärmetauscherelement (360) angeordnet ist,
- wobei jedes der Wärmetauscherelemente (355, 360) eine erste Verbindungsleitung (370), eine zweite Verbindungsleitung (375) und eine Heizschlange (365) umfasst,
- wobei die zweite Verbindungsleitung (375) des ersten Wärmetauscherelements (355) mittels einer dritten Verbindungsleitung (400) mit der zweiten Verbindungsleitung (375) des zweiten Wärmetauscherelements (360) verbunden ist,
- wobei zwischen dem ersten Wärmetauscherelement (355) und dem zweiten Wärmetauscherelement (360) die Wärmetauschereinrichtung (335) einen Schutzbereich (401) begrenzt,
- wobei die Entnahmeleitung (285, 290, 295) in dem Schutzbereich (401) angeordnet ist.

10. Tanksystem (55) nach Anspruch 9,
- wobei die erste Verbindungsleitung (370) mit der Anschlusseinrichtung (265) gekoppelt ist,
- wobei die erste Verbindungsleitung (370) und die zweite Verbindungsleitung (375) parallel zueinander angeordnet sind,
- wobei die erste Verbindungsleitung (370) und die zweite Verbindungsleitung (375) zumindest abschnittsweise parallel zum ersten Verbindungsabschnitt (305) der Entnahmeleitung (285, 290, 295) angeordnet ist,
- wobei die erste Verbindungsleitung (370) in einer dritten Ebene und der erste Heizschlangenabschnitt (385) in einer vierten Ebene angeordnet ist,
- wobei die dritte Ebene (391) zu der vierten Ebene (392) einen zweiten Winkel (β) einschließt,
- wobei der zweite Winkel einen Wert aufweist, der in einem Bereich von größer 90° und kleiner 180° liegt,
- wobei die Heizschlange (365) wenigstens einen ersten Heizschlangenabschnitt (385) umfasst,
- wobei der erste Heizschlangenabschnitt (385) mit der ersten Verbindungsleitung (370) verbunden ist,
- wobei der erste Heizschlangenabschnitt (385) senkrecht zum Entnahmeabschnitt (315) angeordnet ist.

11. Tanksystem (55) nach Anspruch 10,
- wobei die Heizschlange (365) einen zweiten Heizschlangenabschnitt (390) und einen Heizschlangenverbindungsabschnitt (395) umfasst,
- wobei die zweite Verbindungsleitung (375) mit der Heizschlange (365) verbunden ist,
- wobei die zweite Verbindungsleitung (375) zumindest abschnittsweise parallel zu der ersten Verbindungsleitung (370) angeordnet ist,
- wobei der Heizschlangenverbindungsabschnitt (395) den ersten Heizschlangenabschnitt (385) mit dem zweiten Heizschlangenabschnitt (390) fluidisch verbindet und auf einer zur ersten Verbindungsleitung (370) abgewandten Seite des ersten Heizschlangenabschnitts (385) angeordnet ist.

12. Tanksystem nach einem der Ansprüche 9 bis 11,
- wobei die Filtereinrichtung (320, 325, 330) zwischen der Heizschlange (365) des ersten Wärmetauscherelements (355) und der Heizschlage (365) des zweiten Wärmetauscherelements (360) angeordnet ist,
- wobei die Filtereinrichtung (320, 325, 330) vorzugweise als Flächenfilter ausgebildet ist,
- wobei vorzugsweise mehrere Filtereinrichtungen (320, 325, 330) vorgesehen sind, die in einer Reihe (331) parallel zu der Heizschlange (365) angeordnet sind.

13. Fahrzeug (10), insbesondere ein diesel-elektrisch betriebenes Schienenfahrzeug,
- mit einem Tanksystem (55), einem Längsträger (155, 160) und einer Fahrzeugseitenbegrenzung (165, 170),
- wobei das Tanksystem (55) nach einem der vorhergehenden Ansprüche ausgebildet ist,
- wobei der Tank (70) unter dem Längsträger (155, 160) angeordnet ist,
- wobei quer zu einer Fahrtrichtung des Fahrzeugs (10) die Fahrzeugseitenbegrenzung (165, 170) und der Längsträger (155, 160) versetzt angeordnet sind,
- wobei quer zu der Fahrtrichtung die Fahrzeugseitenbegrenzung (165, 170) und der Längsträger (155, 160) einen Montageraum (175) zur Montage und/oder Demontage der Entnahmevorrichtung (80) begrenzen,
- wobei nach unten hin der Montageraum (175) durch die Tankoberseite (115) des Tanks (70) begrenzt ist,
- wobei das Tanksystem (55) wenigstens eine Pumpenvorrichtung (85) und eine Anschlussleitung (90) umfasst,
- wobei die Pumpenvorrichtung (95) eine Saugseite und eine Druckseite aufweist,
- wobei die Saugseite über die Anschlussleitung (90) mit der Entnahmevorrichtung (80) fluidisch verbunden ist,
- wobei die Druckseite mit einem Abgasnachbehandlungssystem (50) des Fahrzeugs (10) fluidisch verbindbar ist,
- wobei die Pumpenvorrichtung (85) und die Anschlussleitung (90) in dem Montageraum (175) angeordnet sind.

14. Fahrzeug (10) nach Anspruch 13,
- wobei die Anschlusseinrichtung (260) schräg hin zur Fahrzeugseitenbegrenzung (165, 170) geneigt angeordnet ist
- und/oder
- wobei der Tank (70) sich wenigstens über 80 Prozent einer Gesamtfahrzeugbreite des Fahrzeugs (10) erstreckt.

## Claims

1. Tank system (55) for a vehicle (10),
- having an extraction device (80) and having a tank (70),
- wherein the extraction device (80) comprises an extraction line (285, 290, 295) and an attachment device (265),
- wherein the tank (70) comprises a tank top side (115),
- wherein the tank top side (115) comprises a fastening wall (140) and a first tank top side section (205),
- wherein the fastening wall (140) and the first tank top side section (205) delimit a tank interior space (71) at a top side,
- wherein the tank interior space (71) can be filled with an exhaust-gas aftertreatment liquid (75),
- wherein the fastening wall (140) is arranged obliquely with respect to the first tank top side section (205),
- wherein the fastening wall (140) has a fastening surface (145) and a tank opening (150),
- wherein the attachment device (265) is fastened to the fastening surface (145),
- wherein the extraction line (285, 290, 295) is led through the tank opening (150),
- wherein the tank (70) comprises a tank base (110) having a first tank base section (180) and a second tank base section (185),
- wherein the second tank base section (185) is arranged at a lower level than the first tank base section (180) and is connected to the first tank base section (180),
- wherein the second tank base section (185) is arranged parallel to the first tank top side section (205),
- wherein the extraction line (285, 290, 295) is, at least in sections, arranged obliquely with respect to the second tank base section (185),
**characterized in that** the first tank base section (180) is arranged obliquely with respect to the second tank base section (185),
- the extraction line (285, 290, 295) opens out above the second tank base section (185) of the tank base (110) and is coupled to the attachment device (265),
- wherein the fastening wall (140) is arranged preferably entirely above the first tank base section (180).

2. Tank system (55) according to Claim 1,
- wherein the tank (70) comprises a tank side wall (120),
- wherein the fastening wall (140) is arranged so as to be obliquely inclined relative to the tank side wall (120),
- and/or
- wherein the tank side wall (120) is arranged perpendicular to the first tank top side section (205).

3. Tank system (55) according to Claim 2,
- wherein the tank side wall (120) is connected by means of a lower end (190) to a first end (195) of the first tank base section (180),
- wherein a second end (200) of the first tank base section (180) is connected to the second tank base section (185),
- wherein the second tank base section (185) is arranged below the lower end (190) of the tank side wall (120) and laterally offset with respect to the tank side wall (120),
- wherein the fastening wall (140) is arranged above the first tank base section (180).

4. Tank system (55) according to Claim 3,
- wherein the fastening wall (140) projects at least in sections beyond the tank side wall (120),
- wherein, at least in sections, the tank side wall (120) delimits a storage volume (171) of the tank (70) and the fastening wall (140) delimits an expansion volume (230) for the exhaust-gas aftertreatment liquid (75).

5. Tank system according to one of Claims 2 to 4,
- wherein a depression (220) is provided on the tank top side (115) between the fastening wall (140) and the tank side wall (120),
- wherein the depression (220) has the same longitudinal extent as the fastening wall (140).

6. Tank system according to one of the preceding claims,
- wherein the fastening wall (140), at the top side, projects at least in sections beyond the first tank top side section (205),
- wherein, at an upper end (225), the fastening wall (140) is connected to an upper end (224) of the second tank top side section (210) of the tank top side (115),
- wherein a lower end (226) of the second tank top side section (210) is connected to the first tank top side section (205),
- wherein the second tank top side section (210) and the fastening wall (140) are adjoined by a front delimiting wall (250) and a rear-side delimiting wall (255),
- wherein the front delimiting wall (250) and the rear-side delimiting wall (255) are oriented parallel to one another,
- wherein the front delimiting wall (250) and the rear-side delimiting wall (255) are arranged perpendicular to the first tank top side section (205).

7. Tank system (55) according to one of the preceding claims,
- wherein the extraction device comprises a filter device (320, 325, 330),
- wherein the extraction line (285, 290, 295) is designed to conduct the exhaust-gas aftertreatment liquid (75),
- wherein the extraction line (285, 290, 295) comprises an extraction section (315) and a first connecting section (305),
- wherein the first connecting section (305) is coupled to the attachment device (260),
- wherein the extraction section (315) is coupled to the first connecting section (305),
- wherein the first connecting section (305) is arranged so as to be obliquely inclined with respect to the extraction section (315),
- wherein the extraction section (315) is oriented perpendicular to the first tank top side section (205),
- wherein the filter device (320, 325, 330) is connected to the extraction section (315) on a side of the extraction section (315) averted from the first connecting section (305),
- wherein the first connecting section (305) is arranged so as to run in a first plane (317),
- wherein the extraction section (315) is arranged so as to run in a second plane (318),
- wherein the first plane (317) is arranged obliquely with respect to the second plane (317) and enclose a first angle (α),
- wherein the first angle (α) has a value,
- wherein the value preferably lies in a range of less than 90° and greater than 0°,
- wherein, in particular, the value lies in a range of greater than 0° to 45°,
- wherein, in particular, the value lies in a range from 15° to 30°.

8. Tank system (55) according to Claim 7,
- wherein the extraction line (285, 290, 295) comprises a second connecting section (310),
- wherein the second connecting section (310) is arranged between the first connecting section (305) and the extraction section (315) and connects the extraction section (315) to the first connecting section (305),
- wherein the second connecting section (310) is arranged so as to be obliquely inclined with respect to the extraction section (315) and obliquely inclined with respect to the first connecting section (305).

9. Tank system (55) according to one of the preceding claims,
- having a heat exchanger device (335) with a first heat exchanger element (355) and a second heat exchanger element (360),
- wherein the heat exchanger device (335) can be filled with a heat carrier medium (350),
- wherein the first heat exchanger element (355) is arranged offset with respect to the second heat exchanger element (360),
- wherein each of the heat exchanger elements (355, 360) comprises a first connecting line (370), a second connecting line (375) and a heating tube (365),
- wherein the second connecting line (375) of the first heat exchanger element (355) is connected by means of a third connecting line (400) to the second connecting line (375) of the second heat exchanger element (360),
- wherein, between the first heat exchanger element (355) and the second heat exchanger element (360), the heat exchanger device (335) delimits a protected region (401),
- wherein the extraction line (285, 290, 295) is arranged in the protected region (401).

10. Tank system (55) according to Claim 9,
- wherein the first connecting line (370) is coupled to the attachment device (265),
- wherein the first connecting line (370) and the second connecting line (375) are arranged parallel to one another,
- wherein the first connecting line (370) and the second connecting line (375) are, at least in sections, arranged parallel to the first connecting section (305) of the extraction line (285, 290, 295),
- wherein the first connecting line (370) is arranged in a third plane and the first heating tube section (385) is arranged in a fourth plane,
- wherein the third plane (391) encloses a second angle (β) with the fourth plane (392),
- wherein the second angle has a value which lies in a range of greater than 90° and less than 180°,
- wherein the heating tube (365) comprises at least one first heating tube section (385),
- wherein the first heating tube section (385) is connected to the first connecting line (370),
- wherein the first heating tube section (385) is arranged perpendicular to the extraction section (315).

11. Tank system (55) according to Claim 10,
- wherein the heating tube (365) comprises a second heating tube section (390) and a heating tube connecting section (395),
- wherein the second connecting line (375) is connected to the heating tube (365),
- wherein the second connecting line (375) is, at least in sections, arranged parallel to the first connecting line (370),
- wherein the heating tube connecting section (395) fluidically connects the first heating tube section (385) to the second heating tube section (390) and is arranged on a side of the first heating tube section (385) which is averted from the first connecting line (370).

12. Tank system according to one of Claims 9 to 11,
- wherein the filter device (320, 325, 330) is arranged between the heating tube (365) of the first heat exchanger element (355) and the heating tube (365) of the second heat exchanger element (360),
- wherein the filter device (320, 325, 330) is preferably formed as an areal filter,
- wherein, preferably, multiple filter devices (320, 325, 330) are provided, which are arranged in a row (331) parallel to the heating tube (365).

13. Vehicle (10), in particular a rail vehicle operated on a diesel-electric basis,
- having a tank system (55), having a longitudinal member (155, 160) and having a vehicle side delimitation (165, 170),
- wherein the tank system (55) is designed according to one of the preceding claims,
- wherein the tank (70) is arranged under the longitudinal member (155, 160),
- wherein the vehicle side delimitation (165, 170) and the longitudinal member (155, 160) are arranged offset transversely with respect to a direction of travel of the vehicle (10),
- wherein, transversely with respect to the direction of travel, the vehicle side delimitation (165, 170) and the longitudinal member (155, 160) delimit an installation space (175) for the installation and/or uninstallation of the extraction device (80),
- wherein, in a downward direction, the installation space (175) is delimited by the tank top side (115) of the tank (70),
- wherein the tank system (55) comprises at least one pump device (85) and one attachment line (90),
- wherein the pump device (95) has a suction side and a pressure side,
- wherein the suction side is fluidically connected via the attachment line (90) to the extraction device (80),
- wherein the pressure side is fluidically connectable to an exhaust-gas aftertreatment system (50) of the vehicle (10),
- wherein the pump device (85) and the attachment line (90) are arranged in the installation space (175).

14. Vehicle (10) according to Claim 13,
- wherein the attachment device (260) is arranged so as to be obliquely inclined toward the vehicle side delimitation (165, 170),
- and/or
- wherein the tank (70) extends at least over 80 percent of a total vehicle width of the vehicle (10).

## Revendications

1. Système de réservoir (55) pour un véhicule (10)
- comprenant un dispositif de prélèvement (80) et un réservoir (70) ;
- dans lequel le dispositif de prélèvement (80) comprend un conduit de prélèvement (285, 290, 295) et un mécanisme de raccordement (265) ;
- dans lequel le réservoir (70) comprend un côté supérieur de réservoir (115) ;
- dans lequel le côté supérieur de réservoir (115) comprend une paroi de fixation (140) et un premier tronçon de côté supérieur de réservoir (205) ;
- dans lequel la paroi de fixation (140) et le premier tronçon de côté supérieur de réservoir (205) délimitent, sur le côté supérieur, un espace interne de réservoir (71) ;
- dans lequel l'espace interne de réservoir (71) peut être rempli avec un liquide (75) de traitement ultérieur des gaz d'échappement ;
- dans lequel la paroi de fixation (140) est disposée en oblique par rapport au premier tronçon de côté supérieur de réservoir (205) ;
- dans lequel la paroi de fixation (140) présente une surface de fixation (145) et une ouverture de réservoir (150) ;
- dans lequel le mécanisme de raccordement (265) est fixé contre la surface de fixation (145) ;
- dans lequel le conduit de prélèvement (285, 290, 295) est guidé à travers l'ouverture de réservoir (150) ;
- dans lequel le réservoir (70) comprend une base de réservoir (110) comprenant un premier tronçon de base de réservoir (180) et un deuxième tronçon de base de réservoir (185) ;
- dans lequel le deuxième tronçon de base de réservoir (185) est situé plus profondément que le premier tronçon de base de réservoir (180) et est relié au premier tronçon de base de réservoir (180) ;
- dans lequel le deuxième tronçon de base de réservoir (185) est disposé parallèlement au premier tronçon de côté supérieur de réservoir (205) ;
- dans lequel le conduit de prélèvement (285, 290, 295) est disposé, au moins en partie, en oblique par rapport au deuxième tronçon de base de réservoir (185) ;
- **caractérisé en ce que** le premier tronçon de base de réservoir (180) est disposé en oblique par rapport au deuxième tronçon de base de réservoir (185) ;
- le conduit de prélèvement (285, 290, 295) débouche au-dessus du deuxième tronçon de base de réservoir (185) de la base (110) du réservoir et est couplé au mécanisme de raccordement (265) ;
- dans lequel la paroi de fixation (140), est disposée, de préférence complètement, au-dessus du premier tronçon de base de réservoir (180).

2. Système de réservoir (55) selon la revendication 1,
- dans lequel le réservoir (70) comprend une paroi latérale de réservoir (120) ;
- dans lequel la paroi de fixation (140) est inclinée en oblique par rapport à la paroi latérale de réservoir (120) ;
- et/ou
- dans lequel la paroi latérale de réservoir (120) est disposée perpendiculairement au premier tronçon de côté supérieur de réservoir (205).

3. Système de réservoir (55) selon la revendication 2,
- dans lequel la paroi latérale de réservoir (120) est reliée, avec une extrémité inférieure (190), à une première extrémité (195) du premier tronçon de base de réservoir (180) ;
- dans lequel une seconde extrémité (200) du premier tronçon de base de réservoir (180) est reliée au deuxième tronçon de base de réservoir (185) ;
- dans lequel le deuxième tronçon de base de réservoir (185) est disposé en-dessous de l'extrémité inférieure (190) de la paroi latérale de réservoir (120) et en décalage latéral par rapport à la paroi latérale de réservoir (120) ;
- dans lequel la paroi de fixation (140) est disposée au-dessus du premier tronçon de base de réservoir (180).

4. Système de réservoir (55) selon la revendication 3 ;
- dans lequel la paroi de fixation (140) fait saillie au moins en partie au-delà de la paroi latérale de réservoir (120) ;
- dans lequel, au moins en partie, la paroi latérale de réservoir (120) délimite un volume de stockage (171) du réservoir (70) et la paroi de fixation (140) délimite un volume d'expansion (230) pour le liquide (75) de traitement ultérieur des gaz d'échappement.

5. Système de réservoir selon l'une quelconque des revendications 2 à 4 ;
- dans lequel on prévoit, contre le côté supérieur de réservoir (115), entre la paroi de fixation (140) et la paroi latérale de réservoir (120), un renfoncement (220) ;
- dans lequel le renfoncement (220) présente la même étendue longitudinale que celle de la paroi de fixation (140).

6. Système de réservoir selon l'une quelconque des revendications précédentes ;
- dans lequel la paroi de fixation (140) fait saillie, du côté supérieur, au moins en partie, au-delà du premier tronçon de côté supérieur du réservoir (205) ;
- dans lequel, à une extrémité supérieure (225), la paroi de fixation (140) est reliée à une extrémité supérieure (224) du deuxième tronçon de côté supérieur de réservoir (210) du côté supérieur de réservoir (115) ;
- dans lequel une extrémité inférieure (226) du deuxième tronçon de côté supérieur de réservoir (210) est reliée au premier tronçon de côté supérieur de réservoir (205) ;
- dans lequel une paroi de délimitation avant (250) et une paroi de délimitation arrière (255) sont adjacentes au deuxième tronçon de côté supérieur de réservoir (210) et à la paroi de fixation (140) ;
- dans lequel la paroi de délimitation avant (250) et la paroi de délimitation arrière (255) sont orientées en parallèle l'une par rapport à l'autre ;
- dans lequel la paroi de délimitation avant (250) et la paroi de délimitation arrière (255) sont disposées perpendiculairement au premier tronçon de côté supérieur de réservoir (205).

7. Système de réservoir (55) selon l'une quelconque des revendications précédentes ;
- dans lequel le mécanisme de prélèvement comprend un mécanisme de filtration (320, 325, 330) ;
- dans lequel le conduit de prélèvement (285, 290, 295) est réalisé de manière à guider le liquide (75) de traitement ultérieur des gaz d'échappement ;
- dans lequel le conduit de prélèvement (285, 290, 295) comprend un tronçon de prélèvement (315) et un premier tronçon de liaison (305) ;
- dans lequel le premier tronçon de liaison (305) est couplé au mécanisme de raccordement (260) ;
- dans lequel le tronçon de prélèvement (315) est couplé au premier tronçon de liaison (305) ;
- dans lequel le premier tronçon de liaison (305) est incliné en oblique par rapport au tronçon de prélèvement (315) ;
- dans lequel le tronçon de prélèvement (315) est orienté perpendiculairement au premier tronçon de côté supérieur de réservoir (205) ;
- dans lequel le mécanisme de filtration (320, 325, 330) est relié au tronçon de prélèvement (315) sur un côté du tronçon de prélèvement (315) qui se détourne du premier tronçon de liaison (305) ;
- dans lequel le premier tronçon de liaison (305) est disposé de manière à s'étendre dans un premier plan (317) ;
- dans lequel le tronçon de prélèvement (315) est disposé de manière à s'étendre dans un deuxième plan (318) ;
- dans lequel le premier plan (317) est disposé en oblique par rapport au deuxième plan (317), les deux plans formant un premier angle (α) ;
- dans lequel le premier angle (α) présente une première valeur ;
- dans lequel, de préférence, la valeur se situe dans une plage d'une valeur inférieure à 90° et supérieure à 0° ;
- dans lequel, en particulier, la valeur se situe dans une plage d'une valeur supérieure à 0° à une valeur égale à 45° ;
- dans lequel en particulier la valeur se situe dans une plage de 15° à 30°.

8. Système de réservoir (55) selon la revendication 7 ;
- dans lequel le conduit de prélèvement (285, 290, 295) comprend un deuxième tronçon de liaison (310) ;
- dans lequel le deuxième tronçon de liaison (310) est disposé entre le premier tronçon de liaison (305) et le tronçon de prélèvement (315) et relie le tronçon de prélèvement (315) au premier tronçon de liaison (305) ;
- dans lequel le deuxième tronçon de liaison (310) est incliné en oblique par rapport au tronçon de prélèvement (315) et est incliné en oblique par rapport au premier tronçon de liaison (305).

9. Système de réservoir (55) selon l'une quelconque des revendications précédentes ;
présentant un mécanisme faisant office d'échangeur de chaleur (335) comprenant un premier élément échangeur de chaleur (355) et un second élément échangeur de chaleur (360) ;
- dans lequel le mécanisme faisant office d'échangeur de chaleur (335) peut être rempli avec un milieu caloporteur (350) ;
- dans lequel le premier élément échangeur de chaleur (355) est disposé en décalage par rapport au second élément échangeur de chaleur (360) ;
- dans lequel chacun des éléments échangeurs de chaleur (355, 360) comprend un premier conduit de liaison (370), un deuxième conduit de liaison (375) et un serpentin de chauffage (365) ;
- dans lequel le deuxième conduit de liaison (375) du premier élément échangeur de chaleur (355) est relié au moyen d'un troisième conduit de liaison (400) au deuxième conduit de liaison (375) du second élément échangeur de chaleur (360) ;
- dans lequel, entre le premier élément échangeur de chaleur (355) et le deuxième élément échangeur de chaleur (360), le mécanisme faisant office d'échangeur de chaleur (335) délimite une zone de protection (401) ;
- dans lequel le conduit de prélèvement (285, 290, 295) est disposé dans la zone de protection (401).

10. Système de réservoir (55) selon la revendication 9 ;
- dans lequel le premier conduit de liaison (370) est couplé au mécanisme de raccordement (265) ;
- dans lequel le premier conduit de liaison (370) et le deuxième conduit de liaison (375) sont disposés en parallèle l'un par rapport à l'autre ;
- dans lequel le premier conduit de liaison (370) et le deuxième conduit de liaison (375) sont disposés, au moins en partie, en parallèle par rapport au premier tronçon de liaison (305) du conduit de prélèvement (285, 290, 295) ;
- dans lequel le premier conduit de liaison (370) est disposé dans un troisième plan et le premier tronçon de serpentin de chauffage (385) est disposé dans un quatrième plan ;
- dans lequel le troisième plan (391) forme un deuxième angle (β) par rapport au quatrième plan (392) ;
- dans lequel le deuxième angle présente une valeur qui se situe dans une plage d'une valeur supérieure à 90° et inférieure à 180° ;
- dans lequel le serpentin de chauffage (365) comprend au moins un premier tronçon de serpentin de chauffage (385) ;
- dans lequel le premier tronçon de serpentin de chauffage (385) est relié au premier conduit de liaison (370) ;
- dans lequel le premier tronçon de serpentin de chauffage (385) est disposé perpendiculairement au tronçon de prélèvement (315).

11. Système de réservoir (55) selon la revendication 10 ;
- dans lequel le serpentin de chauffage (365) comprend un deuxième tronçon de serpentin de chauffage (390) et un tronçon de liaison de serpentin de chauffage (395) ;
- dans lequel le deuxième conduit de liaison (375) est relié au serpentin de chauffage (365) ;
- dans lequel le deuxième conduit de liaison (375) est disposé, au moins en partie, en parallèle par rapport au deuxième conduit de liaison (370) ;
- dans lequel le tronçon de liaison de serpentin de chauffage (395) relie par fluide le premier tronçon de serpentin de chauffage (385) au deuxième tronçon de serpentin de chauffage (390) et est disposé sur un côté du premier tronçon de serpentin de chauffage (385) qui se détourne du premier conduit de liaison (370).

12. Système de réservoir selon l'une quelconque des revendications 9 à 11 ;
- dans lequel le mécanisme de filtration (320, 325, 330) est disposé entre le serpentin de chauffage (365) du premier élément échangeur de chaleur (355) et le serpentin de chaleur (365) du deuxième élément échangeur de chaleur (360) ;
- dans lequel le mécanisme de filtration (320, 325, 330) est réalisé de préférence sous la forme d'un filtre plat ;
- dans lequel on prévoit de préférence plusieurs mécanismes de filtration (320, 325, 330) qui sont disposés en une rangée (331) parallèlement au serpentin de chauffage (365).

13. Véhicule (10), en particulier véhicule ferroviaire du type à entraînement diesel-électrique
- comprenant un système de réservoir (55), un support longitudinal (155, 160) et une délimitation latérale de véhicule (165, 170) ;
- dans lequel le système de réservoir (55) est réalisé conformément à l'une quelconque des revendications précédentes ;
- dans lequel le réservoir (70) est disposé en dessous du support longitudinal (155, 160) ;
- dans lequel la délimitation latérale de véhicule (165, 170) et le support longitudinal (155, 160) sont disposés en décalage en direction transversale par rapport à une direction de déplacement du véhicule (10) ;
- dans lequel la délimitation latérale de véhicule (165, 170) et le support longitudinal (155, 160) délimitent un espace de montage (175) pour le montage et/ou le démontage du dispositif de prélèvement (80), en direction transversale par rapport à la direction de déplacement ;
- dans lequel, l'espace de montage (175) est délimité, vers le bas, par le côté supérieur de réservoir (115) du réservoir (70) ;
- dans lequel le système de réservoir (55) comprend au moins un dispositif de pompage (85) et un conduit de raccordement (90) ;
- dans lequel le dispositif de pompage (95) présente un côté aspiration et un côté pression ;
- dans lequel le côté aspiration est relié par fluide au dispositif de prélèvement (80) par l'intermédiaire du conduit de raccordement (90) ;
- dans lequel le côté pression peut être relié par fluide à un système (50) de traitement ultérieur des gaz d'échappement du véhicule (10) ;
- dans lequel le dispositif de pompage (85) et le conduit de raccordement (90) sont disposés dans l'espace de montage (175).

14. Véhicule (10) selon la revendication 13 :
- dans lequel le mécanisme de raccordement (260) est incliné en oblique en direction de la délimitation latérale de véhicule (165, 170) ;
- et/ou
- dans lequel le réservoir (70) s'étend au moins sur 80 % d'une largeur de véhicule totale du véhicule (10).
